# EUROPEAN PATENT APPLICATION

(11) **EP 4 738 499 A1**
(43) Date of publication of application: **06.05.2026**
(21) Application number: 25205274.1
(22) Date of filing: 29.09.2025
(51) Int. Cl.: H01M 10/04, H01M 10/613, H01M 10/643, H01M 10/6557, H01M 10/6567, H01M 50/264, H01M 50/291

(54) **BATTERY MODULE MANUFACTURING METHOD**

(30) Priority: 30.10.2024 JP 2024190349; 28.03.2025 JP 2025055036
(71) Applicant: AISIN CORPORATION, Aichi 448-8650 (JP)
(72) Inventor: KATO, Mitsuhiko, Kariya, 448-8650 (JP); UMEMURA, Eisuke, Kariya, 448-8650 (JP); NINOMIYA, Suguru, Kariya, 448-8650 (JP)
(74) Representative: TBK

(57) **Abstract**

A battery cell manufacturing method is a battery module manufacturing method for manufacturing a battery module (5) including at least one battery cell (1), and a heat exchange member (2) in which a flow path (24) through which a heat medium flows is formed. The method includes, assuming that a direction, in which the battery cell and the heat exchange member are arranged side by side, is an arrangement direction: a first step of disposing the heat exchange member adjacent to the battery cell along the arrangement direction; a second step of pressing the battery cell and the heat exchange member in the arrangement direction; and a third step of fixing a positional relationship between the battery cell and the heat exchange member.

## Description

### TECHNICAL FIELD

The present disclosure relates to a battery module manufacturing method.

### BACKGROUND DISCUSSION

JP 2022-506553 T discloses a battery module (21) including a battery cell (30), a heat exchange member (50/230) that exchanges heat with the battery cell (30), and a potting material (231) that fixes a positional relationship between the battery cell (30) and the heat exchange member (50) (reference numerals in parentheses in the background art are those of the referenced document). The potting material (231) functions as an adhesive for fixing the battery cell (30) and the heat exchange member (50/230) in close contact with each other. The battery module (21) is formed through: a step of disposing a plurality of the battery cells (30) at predetermined positions; a step of disposing a flexible heat exchange member (50/230) between the plurality of the battery cells (30); a step of causing a fluid to flow in the heat exchange member (50/230) to expand the heat exchange member (50/230) and bring the heat exchange member (50/230) into contact with the plurality of the battery cells (30); and a step of fixing a positional relationship between the plurality of the battery cells (30) and the heat exchange member (50/230) in at least a partial region by the potting material (231) in a state where the heat exchange member (50/230) is expanded.

In the battery module described above, when the battery cells and the heat exchange member are disposed, the battery cells and the heat exchange member are not in contact with each other, but are brought into contact with each other by expanding the heat exchange member with the fluid. If the fluid is not partially spread due to twisting of the heat exchange member or the like, contact may be insufficient. It has also been proposed to use a guide member to prevent this; however, this may increase the number of steps in manufacturing and lead to higher manufacturing costs. After the battery module is manufactured, the fluid is discharged from the heat exchange member, and even if the positional relationship is fixed in at least a partial region by the potting material, the contact state between the battery cell and the heat exchange member may not be maintained properly.

In recent years, improvement in environmental friendliness is also required in the battery module as described above in order to reduce the environmental load. For example, when a battery module is disposed of, it is preferable that each of the members constituting the battery module be separable. In addition, in a case where a battery module has a plurality of battery cells, it is preferable that partial replacement of the battery cells be possible. When the members constituting a battery module are adhered to each other as described above, disassembly of the battery module is not easy, and separation at the time of disposal and maintenance, such as replacement of battery cells, are also not easy.

A need thus exists for a method for manufacturing a battery module that can be easily disassembled as needed while a battery cell and a heat exchange component are properly positioned.

### SUMMARY

In view of the above, the method for manufacturing a battery cell is a method for manufacturing a battery module including at least one battery cell and a heat exchange member in which a flow path through which a heat medium flows is formed.

The method includes, assuming that a direction, in which the battery cell and the heat exchange member are arranged side by side, is an arrangement direction: a first step of disposing the heat exchange member adjacent to the battery cell along the arrangement direction; a second step of pressing the battery cell and the heat exchange member in the arrangement direction; and a third step of fixing a positional relationship between the battery cell and the heat exchange member.

According to this manufacturing method, the positional relationship between the battery cell and the heat exchange member can be fixed while the battery cell and the heat exchange member are kept pressed in the arrangement direction, so that the battery module can be manufactured by properly positioning the battery cell and the heat exchange member without using an adhesive, a filler, or the like. In addition, it is possible to reduce the need to interpose an adhesive, a filler, or the like between the battery cell and the heat exchange member, whereby the battery module can also be disassembled easily. According to this manufacturing method, it is possible to manufacture a battery module that can be easily disassembled as needed while a battery cell and a heat exchange component are properly positioned, as described above.

Further features and advantages of the battery module manufacturing method will become apparent from the following description of exemplary and non-limiting embodiments described with reference to the drawings.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an exploded perspective view of a first example of a basic structure of a battery module.
Fig. 2 is a perspective view of the first example of the basic structure of the battery module.
Fig. 3 is a cross-sectional view of the first example of the basic structure of the battery module (cross-sectional view taken along line III-III in Fig. 2).
Fig. 4 is a perspective view of a heat exchange member.
Fig. 5 is a cross-sectional view of the heat exchange member (cross-sectional view taken along line V-V in Fig. 4).
Fig. 6 is an exploded cross-sectional view of a second example of the basic structure of the battery module.
Fig. 7 is a cross-sectional view of the second example of the basic structure of the battery module.
Fig. 8 is an exploded perspective view of a third example of the basic structure of the battery module.
Fig. 9 is an exploded cross-sectional view of a fourth example of the basic structure of the battery module.
Fig. 10 is a view illustrating an example of the flow of manufacturing the battery module.
Fig. 11 is an explanatory view of a first step.
Fig. 12 is an explanatory view illustrating an example of a second step and a third step.
Fig. 13 is a perspective view illustrating an example of a battery module manufactured through the steps of Fig. 12.
Fig. 14 is an explanatory view illustrating another example of the second step and the third step.
Fig. 15 is a perspective view illustrating an example of a battery module manufactured through the steps of Fig. 14.
Fig. 16 is an explanatory view schematically illustrating a specific example of the steps of Fig. 14.

### DETAILED DESCRIPTION

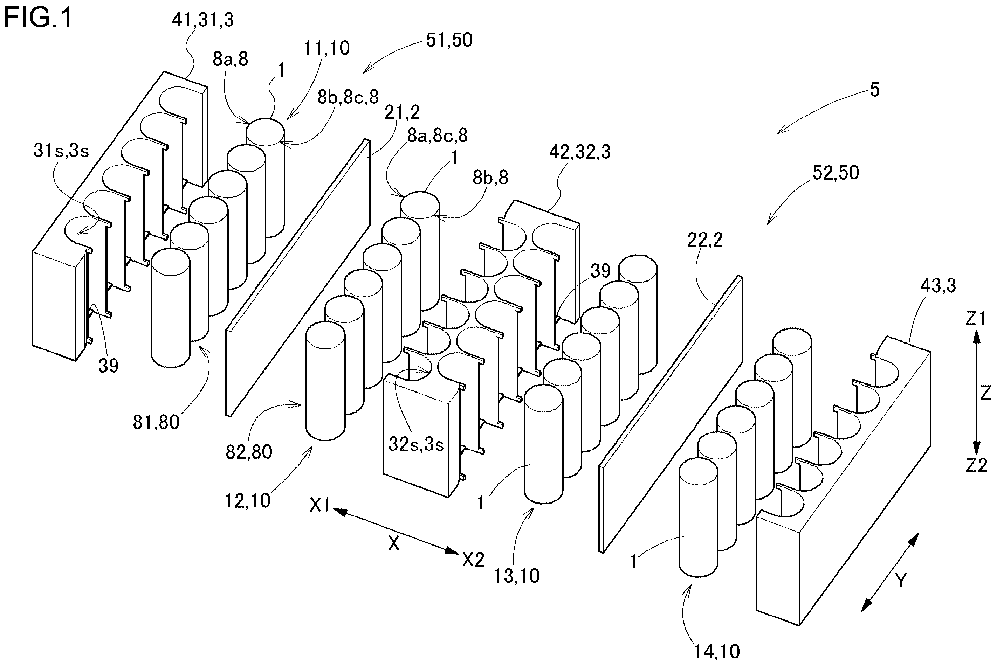

Hereinafter, embodiments of the battery module manufacturing method will be described with reference to the drawings. Figs. 1 to 9 illustrate basic structures of a battery module 5 manufactured by the battery module manufacturing method according to the present embodiment. Since only the basic structures can function as the battery module 5, these basic structures, when described, are simply referred to as the battery module 5 unless it is particularly necessary to distinguish them. The battery module 5 is preferably used as a DC power supply that supplies electric power to a rotating electrical machine (traction motor) serving as a driving power source of a vehicle like an electric vehicle, a hybrid vehicle, or the like, but the application is not limited to such a vehicle. As illustrated in Fig. 1 and the like, the battery module 5 includes at least one battery cell 1 and a heat exchange member 2. Hereinafter, the battery module 5 will be described by exemplifying a plurality of modes. In the present specification, a configuration is exemplified in all the exemplified modes, in which the battery module 5 includes a plurality of the battery cells 1 in order to increase the storage capacity of the battery module 5 or enable a high output voltage. However, the battery module 5 may be configured to include a single battery cell 1. That is, the battery module 5 is configured to include at least one battery cell 1.

The battery cell 1 may contain a relatively expensive raw material or a raw material having a large environmental load when disposed of. For this reason, it is often required to take out the raw material from the used battery module 5 after being replaced due to deterioration of performance. In addition, it is preferable in consideration of reduction in environmental load after disposal that components (e.g., the heat exchange member 2, a holding member 3 to be described later, and the like) other than the battery cells 1 in the battery module 5 be also properly separated. In a case where the battery module 5 includes a plurality of the battery cells 1, the performance of the battery module 5 may be recovered by replacing the battery cell 1 with deteriorated performance. That is, the battery module 5 is required to take into account environmental friendliness, economic efficiency, and maintainability. On the other hand, assuming a case where the battery module 5 is mounted on an automobile, it is required that each component constituting the battery module 5 can maintain a properly positioned state, including the relationship between the battery cells 1 and the heat exchange member 2, even under an environment where vibration or the like occurs. The battery module 5 of the present embodiment is configured to be able to be easily disassembled as needed while the battery cell 1 and the heat exchange member 2 are properly positioned. The battery module manufacturing method of the present embodiment includes steps of properly manufacturing the battery module 5 having such a configuration.

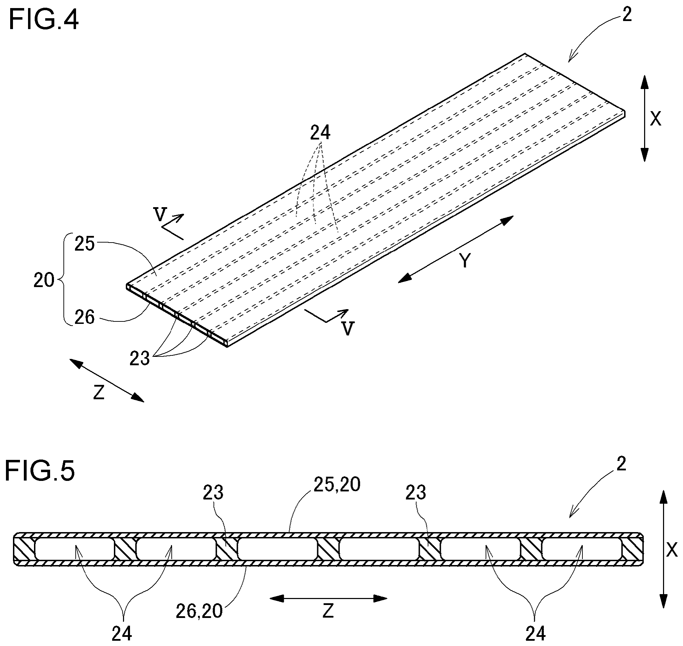

First, the structure of the battery module 5 as a product will be described. The battery module 5 of the present embodiment includes at least one battery cell 1, the heat exchange member 2 in which a flow path 24 (see Figs. 4 and 5) through which a heat medium flows is formed, and the holding member 3 that holds at least the battery cell 1. It can also be said that the holding member 3 is a member for holding the positional relationship between the battery cell 1 and the heat exchange member 2 in a state where the battery module 5 is formed. As the heat medium, a fluid, such as cooling water, oil, or a refrigerant for an air conditioner, can be used. Although details will be described later, the holding member 3 does not adhere the battery cell 1 to the heat exchange member 2 like an adhesive. Therefore, the battery module 5 can be easily disassembled into the battery cell 1, the heat exchange member 2, and the holding member 3.

In describing the configuration of the battery module 5, directions are firstly defined. Here, a direction, in which the battery cell 1 and the heat exchange member 2 are arranged side by side, is defined as an arrangement direction X, one side in the arrangement direction X being referred to as an arrangement direction first side X1, and the other side in the arrangement direction X being referred to as an arrangement direction second side X2. In addition, a direction orthogonal to the arrangement direction X is referred to as a width direction Y, as illustrated in Fig. 1 and the like. The width direction Y is a direction in which, in a case where the battery module 5 includes a plurality of the battery cells 1, the plurality of the battery cells 1 are arrayed, and can also be referred to as a "cell array direction". In addition, a direction orthogonal to the arrangement direction X and the width direction Y (cell array direction) is referred to as an up-down direction Z for convenience. For example, in a case where the battery module 5 is mounted on a vehicle, a direction along the vertical direction in a standard posture (posture in which the vehicle is positioned on a horizontal plane) is the up-down direction Z, the upper direction being referred to as an upper side Z1, and the lower direction being referred to as a lower side Z2. Naturally, this is a direction for convenience, and in the case where the battery module 5 is mounted on a vehicle, the vertical direction and the up-down direction Z may not coincide with each other. In the present embodiment, the battery cell 1 having a cylindrical shape is exemplified, as illustrated in Fig. 1 and the like. In this case, the up-down direction Z coincides with the height direction and the extending direction of the columnar battery cell 1. The columnar battery cell 1 is not limited to a cylindrical shape, and the bottom surface thereof may also have a polygonal shape, such as a triangular prism shape, a quadrangular prism shape, a hexagonal prism shape, or an octagonal shape.

Here, a plurality of the battery cells 1 disposed to be arranged side by side along a direction (width direction Y, cell array direction) orthogonal to the arrangement direction X is referred to as a cell array 10 (battery cell array). Here, an example is given in which one cell array 10 is configured with the battery cells 1 arrayed in a single row along the width direction Y, but one cell array 10 may be formed with the battery cells 1 arrayed in a plurality of rows (e.g., two rows). For example, one cell array 10 may be configured to include two sets each including a plurality of the battery cells 1 arranged in a single row along the width direction Y, in which the two sets are disposed to be shifted in the width direction Y, and the battery cells 1 are disposed in two rows in a staggered manner in the up-down direction Z.

As illustrated in Fig. 1, the battery cell 1 (cell array 10), the heat exchange member 2, and the holding member 3 are disposed side by side along the arrangement direction X. The battery cell 1 (cell array 10) whose position is fixed in the battery module 5 has facing surfaces 8 each facing any member constituting the battery module 5, on both the arrangement direction first side X1 and the arrangement direction second side X2. Here, of the facing surfaces 8, a surface of the battery cell 1 facing the arrangement direction first side X1 is referred to as a first side facing surface 8a, and a surface of the battery cell 1 facing the arrangement direction second side X2 is referred to as a second side facing surface 8b. In addition, of the facing surfaces 8, a surface of the battery cell 1 facing the heat exchange member 2 side is referred to as a heat exchange member side facing surface 8c. The heat exchange member side facing surface 8c does not necessarily have to face the heat exchange member 2 directly, but may do so with another member (another battery cell 1 or cell array 10, a heat conductive member to be described later, or the like) interposed therebetween. The first side facing surface 8a and the second side facing surface 8b can serve as the heat exchange member side facing surface 8c depending on the placement position of the battery cell 1 (cell array 10).

The heat exchange member side facing surface 8c has a shape having unevenness in the arrangement direction X, and the protrusion amounts in the arrangement direction X vary depending on the positions in the width direction Y. Even in a case where the battery cell 1 has a triangular shape or a quadrangular prism shape, and when a side (corner portion) between two adjacent side surfaces, not a side surface (surface other than the bottom surface of the columnar shape), is disposed to face the arrangement direction X, the heat exchange member side facing surface 8c has a shape having unevenness in the arrangement direction X. In addition, even in a case where the battery cell 1, having a triangular shape or a quadrangular prism shape, is disposed such that the side surface thereof faces the arrangement direction X, and when the side (corner portion) is chamfered or when a groove, a protrusion, or the like is provided on the side surface, it can be said that the heat exchange member side facing surface 8c has a shape having unevenness. In the present embodiment, the facing surface 8 that is not the heat exchange member side facing surface 8c also has a shape having unevenness in the arrangement direction X. That is, the first side facing surface 8a and the second side facing surface 8b have shapes each having unevenness in the arrangement direction X, regardless of whether or not the first side facing surface 8a and the second side facing surface 8b are the heat exchange member side facing surface 8c.

When a pressing force in the arrangement direction X can be sufficiently secured, or when a sufficient frictional force can be secured between a member adjacent to the battery cell 1 (cell array 10) in the arrangement direction X and the battery cell 1 (cell array 10), the heat exchange member side facing surface 8c may not have unevenness in the arrangement direction X. Similarly, the first side facing surface 8a and the second side facing surface 8b may not have unevenness in the arrangement direction X, regardless of whether or not the first side facing surface 8a and the second side facing surface 8b are the heat exchange member side facing surface 8c. For example, in a case where the battery cell 1 has a triangular shape or a quadrangular prism shape, the side surface may be disposed to face the arrangement direction X.

In the cell array 10, there are as many facing surfaces 8 as the number of the battery cells 1 arranged in the width direction Y (cell array direction). Although reference numerals are omitted in the drawings, it can be said that the cell array 10 includes a "facing surface group" that is a set of the facing surfaces 8 of a plurality of the battery cells 1. Although reference numerals are similarly omitted in the drawings, a set of the surfaces of the cell array 10 facing the arrangement direction first side X1, of the facing surface group, can be referred to as a "first side facing surface group", and a set of the surfaces of the cell array 10 facing the arrangement direction second side X2 can be referred to as a "second side facing surface group". In addition, of the "facing surface group", a set of the "heat exchange member side facing surfaces 8c" is referred to as a "heat exchange member side facing surface group 80". That is, the surfaces of the cell array 10 facing the heat exchange member 2 side are referred to as a "heat exchange member side facing surface group 80". The first side facing surface group and the second side facing surface group can serve as the heat exchange member side facing surface group 80 depending on the placement position of the cell array 10. The heat exchange member side facing surface group 80 has a shape having unevenness in the arrangement direction X, and the protrusion amounts in the arrangement direction X vary depending on the positions in the width direction Y. In the present embodiment, the facing surface group, which is not the heat exchange member side facing surface group 80, also has a shape having unevenness in the arrangement direction X. That is, the first side facing surface group and the second side facing surface group also have shapes having unevenness in the arrangement direction X, regardless of whether or not the first side facing surface group and the second side facing surface group are the heat exchange member side facing surface group 80.

In a case where the battery cells 1 are disposed with gaps in the width direction Y to form the cell array 10, the facing surface 8 of the battery cell 1 and the gap can collectively be considered as the "facing surface group". Therefore, it can be considered that the facing surface group of the cell array 10, in which a plurality of the battery cells 1 each having a triangular shape or a quadrangular prism shape having no groove or protrusion on its side surface are disposed with the side surfaces facing the arrangement direction X and with gaps in the width direction Y, also has a shape having unevenness.

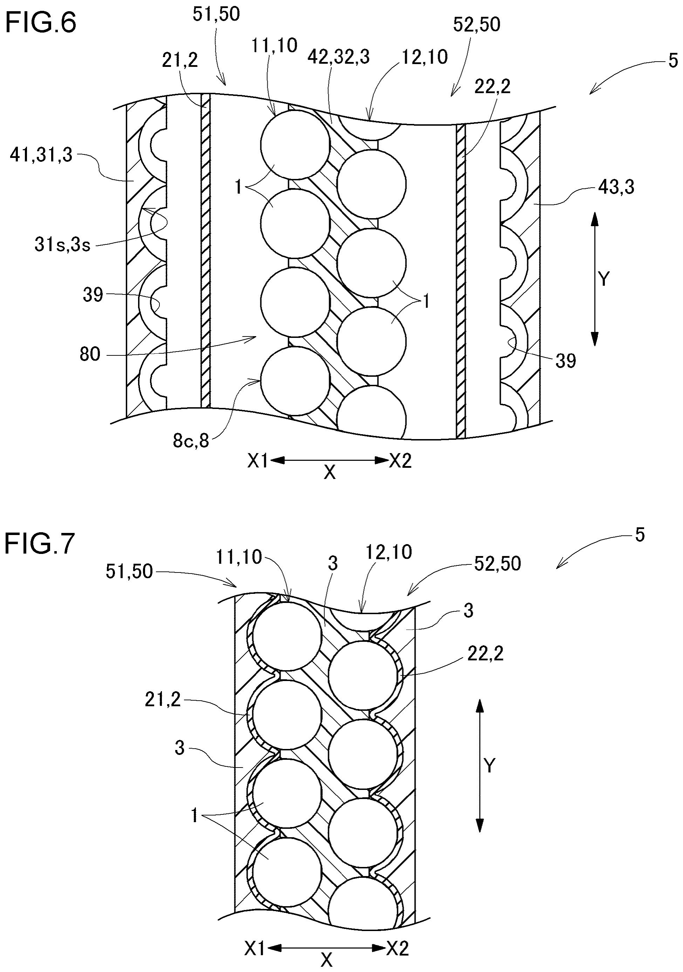

Although details will be described later, in a case where one cell array 10 (first cell array 11 or second cell array 12) faces one heat exchange member 2 in the arrangement direction X as illustrated in Figs. 6 and 7, one of the two facing surface groups of the cell array 10 serves as the "heat exchange member side facing surface group 80". In a case where two cell arrays 10 (a set of the first cell array 11 and the second cell array 12 or a set of a third cell array 13 and a fourth cell array 14) face one heat exchange member 2 as illustrated in Figs. 1 to 3, one of the two facing surface groups of each cell array 10 serves as the "heat exchange member side facing surface group 80". For example, when, in the set of the first cell array 11 and the second cell array 12, the heat exchange member side facing surface groups 80 of the respective cell arrays 10 are distinguished, the heat exchange member side facing surface group 80 of the first cell array 11 is referred to as a "heat exchange member side first facing surface group 81", and the heat exchange member side facing surface group 80 of the second cell array 12 is referred to as a "heat exchange member side second facing surface group 82".

The heat exchange member 2 has higher flexibility than the heat exchange member side facing surface 8c. The hardness of the heat exchange member 2 (hardness of an outer wall portion 20 to be described later) is, for example, 20 degrees to 80 degrees, and more preferably 40 degrees to 70 degrees. Therefore, the heat exchange member 2 is pressed toward the heat exchange member side facing surface 8c (heat exchange member side facing surface group 80) side by the holding member 3 in a state of being deformed following the shape of the heat exchange member side facing surface 8c (heat exchange member side facing surface group 80).

The battery module 5, including at least one battery cell 1, the heat exchange member 2 in which a flow path through which the heat medium flows is formed, and the holding member 3 that holds the positional relationship between the battery cell 1 and the heat exchange member 2, can be manufactured by the following procedure. In a first step, the heat exchange member 2 is disposed adjacent to the battery cell 1. Specifically, the battery cells 1 and the heat exchange member 2 having higher flexibility than the heat exchange member side facing surface (8c) are disposed side by side in the arrangement direction X in a state where the heat exchange member side facing surface 8c has a shape having unevenness in the arrangement direction X. In addition, in the first step, the holding members 3 are disposed on the arrangement direction first side X1 and the arrangement direction second side X2 with respect to the battery cell 1 and the heat exchange member 2. In a second step, the heat exchange member 2 is pressed toward the heat exchange member side facing surface 8c side by the holding member 3 such that the heat exchange member 2 is in a state of being deformed following the shape of the heat exchange member side facing surface 8c. When the battery module 5 including the cell array 10 is manufactured, it is fine to configure the cell array 10 by arraying a plurality of the battery cells 1 in the width direction (array direction) in the first step, or preferably in a step prior to the first step.

Since the heat exchange member 2 has higher flexibility than the heat exchange member side facing surface 8c of the battery cell 1, and is pressed toward the heat exchange member side facing surface 8c side so as to be deformed following the shape of the heat exchange member side facing surface 8c, it is easy to increase the heat transfer efficiency between the battery cell 1 and the heat exchange member 2 while the positional relationship between the battery cell 1 and the heat exchange member 2 is defined, even if there is an error in the position or shape of the battery cell 1. In addition, since a configuration is adopted in which the heat exchange member 2 is pressed toward the heat exchange member side facing surface 8c side by the holding member 3 such that the heat exchange member 2 is in a state of being deformed following the shape of the heat exchange member side facing surface 8c, it is possible to reduce the need to interpose an adhesive, a filler, or the like between the battery cell 1 and the heat exchange member 2. Therefore, when the battery module 5 needs to be disassembled, the battery cell 1, the heat exchange member 2, and the holding member 3 can be easily separated.

As illustrated in Fig. 1 and the like, the holding member 3 includes a first holding member 31 disposed on the arrangement direction first side X1 with respect to the battery cell 1 (cell array 10) and the heat exchange member 2, and a second holding member 32 disposed on the arrangement direction second side X2 with respect to the battery cell 1 (cell array 10) and the heat exchange member 2. The battery cell 1 (cell array 10) and the heat exchange member 2 are held in a state of being sandwiched in the arrangement direction X by the first holding member 31 and the second holding member 32.

By sandwiching and holding the battery cell 1 and the heat exchange member 2 in the arrangement direction X by the first holding member 31 and the second holding member 32, the placement positions of the members constituting the battery module 5 are properly maintained with a pressing force in the arrangement direction X or a frictional force between the members adjacent to each other in the arrangement direction X. Therefore, it is possible to reduce the need to interpose an adhesive, a filler, or the like between the battery cell 1 and the heat exchange member 2, between the battery cell 1 and any holding member 3, and between the heat exchange member 2 and any holding member 3. Therefore, it is also easy to disassemble the battery module 5.

It is preferable that the heat exchange member 2 be made of, for example, silicone rubber or elastomer, and have an electrical insulating property. The entire heat exchange member 2 may have an insulating property, or a part of the heat exchange member 2, for example, only the surface of the heat exchange member 2, may be configured to have an electrical insulating property. When the heat exchange member 2 has an electrical insulating property, it is not necessary to separately dispose a member for securing electrical insulating property between the battery cell 1 and the heat exchange member 2, whereby a simple configuration can be realized. In addition, if another insulating member is disposed to secure the electrical insulating property, the heat conductivity between the battery cell 1 and the heat exchange member 2 may be impaired. However, such a risk can be reduced, and the heat transfer efficiency between the battery cell 1 and the heat exchange member 2 can be easily increased. It is preferable that the heat exchange member 2 have an insulating property, but this does not prevent the heat exchange member 2 and the battery cell 1 (cell array 10) from being disposed in the arrangement direction X with another member (heat transfer sheet or the like) having high heat conductivity interposed therebetween.

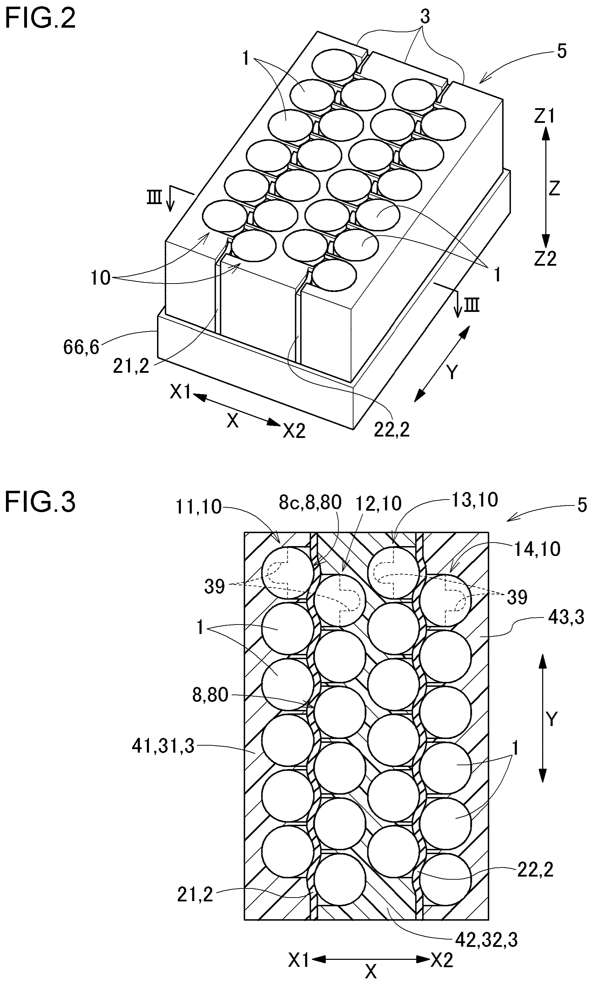

The basic concept of the battery module 5 of the present embodiment has been described above. Hereinafter, a description will be given with reference to specific configuration examples. Figs. 1 to 3 illustrate a first example of the battery module 5. Fig. 3 is a cross-sectional view taken along line III-III in Fig. 2. Figs. 6 and 7 illustrate a second example of the battery module 5. In the second example, a perspective view and an exploded perspective view are omitted, but an exploded cross-sectional view and a cross-sectional view are shown. Figs. 4 and 5 illustrate a configuration example of the heat exchange member 2 common to the first and second examples. Fig. 5 is a cross-sectional view taken along line V-V in Fig. 4.

The configuration of the heat exchange member 2 having flexibility will be first described because it is common to both the first example and the second example. As illustrated in Fig. 4, the heat exchange member 2 is a plate-like member. As illustrated in Figs. 4 and 5, the heat exchange member 2, in which the flow path 24 through which the heat medium flows is formed, includes a pair of outer wall portions 20 (first outer wall portion 25, second outer wall portion 26) disposed to face each other in the arrangement direction X, and a partition wall portion 23 disposed in a region sandwiched between the pair of outer wall portions 20 and having higher hardness than the pair of outer wall portions 20. The flow path 24 is formed in a space where the pair of outer wall portions 20 face each other in a state of being partitioned by the partition wall portion 23. The pair of outer wall portions 20 is softer and has higher flexibility than the partition wall portion 23. Both the outer wall portion 20 and the partition wall portion 23 have higher flexibility than the heat exchange member side facing surface 8c, and the heat exchange member 2 is deformed as a whole following the uneven shape of the heat exchange member side facing surface 8c. However, the outer wall portion 20 has higher followability to the uneven shape than the partition wall portion 23, and even if the heat exchange member 2 is deformed as a whole, the flow path 24 is hardly crushed and closed in the arrangement direction X, whereby the flow path 24 through which the heat medium flows can be secured.

An inlet and an outlet for the heat medium are defined in the flow path 24 partitioned by the partition wall portion 23. In the present embodiment, the heat exchange member 2 includes a plurality of the partition wall portions 23, and a plurality of independent flow paths 24 are formed in the heat exchange member 2. That is, as illustrated in the drawing, the plurality of the flow paths 24 arranged in parallel are disposed in a direction (here, width direction Y) intersecting the up-down direction Z that is the longitudinal direction of the columnar battery cell 1.

In common to the first example and the second example, the battery module 5 includes the cell array 10. However, the battery module 5 may be configured to include a single battery cell 1 instead of the cell array 10, as described above. In common to the first example and the second example, the battery module 5 is configured to include a plurality of (here, two) unit module portions 50 each including one heat exchange member 2. However, the battery module 5 may be configured to include a single unit module portion 50. In a case where one unit module portion 50 is configured to include one battery cell 1 and the battery module 5 is configured to include a single unit module portion 50, the battery module 5 has a minimum configuration in which it is configured to include one battery cell 1.

Hereinafter, the battery module 5 of the first example will be described. As illustrated in Fig. 1, the battery module 5 of the first example is configured to include four cell arrays 10 (first cell array 11, second cell array 12, third cell array 13, fourth cell array 14), two heat exchange members 2 (first heat exchange member 21, second heat exchange member 22), and three holding members 3 (first side holder 41, intermediate holder 42, second side holder 43). Specifically, the battery module 5 of the first example includes, from the arrangement direction first side X1 toward the arrangement direction second side X2, the first side holder 41, the first cell array 11, the first heat exchange member 21, the second cell array 12, the intermediate holder 42, the third cell array 13, the second heat exchange member 22, the fourth cell array 14, and the second side holder 43.

As described above, the battery module 5 of the first example is configured to include two unit module portions 50. A first unit module portion 51, which is one of the unit module portions 50, includes the first side holder 41, the first cell array 11, the first heat exchange member 21, the second cell array 12, and the intermediate holder 42. A second unit module portion 52, which is the other of the unit module portions 50, includes the intermediate holder 42, the third cell array 13, the second heat exchange member 22, the fourth cell array 14, and the second side holder 43. The intermediate holder 42 is commonly used in the first unit module portion 51 and the second unit module portion 52. However, the intermediate holder 42 may include different members (e.g., first intermediate holder, second intermediate holder), which may be used in the respective unit module portions 50. That is, the battery module 5 may be formed by connecting a plurality of the unit module portions 50 that can be used independently. The connection direction may be any direction of the arrangement direction X, the width direction Y, and the up-down direction Z.

One unit module portion 50 of the battery module 5 of the first example includes at least two cell arrays 10 (battery cell arrays). That is, each of the first unit module portion 51 and the second unit module portion 52 includes at least two cell arrays 10 (battery cell arrays). In the first unit module portion 51, the heat exchange member 2 (first heat exchange member 21) is disposed between the first battery cell array (first cell array 11), which is one of the two cell arrays 10, and the second battery cell array (second cell array 12), which is the other thereof, in the arrangement direction X. In the second unit module portion 52, the heat exchange member 2 (second heat exchange member 22) is disposed between the first battery cell array (third cell array 13), which is one of the two cell arrays 10, and the second battery cell array (fourth cell array 14), which is the other thereof, in the arrangement direction X. Note that, as for the reference numerals, those for the first unit module portion 51 are used as representative, and some reference numerals are omitted for the second unit module portion 52, for the sake of simplicity.

In addition, the first battery cell arrays are disposed on the arrangement direction first side X1 with respect to the second battery cell arrays, respectively. In the first unit module portion 51, the first cell array 11 (first battery cell array) is disposed on the arrangement direction first side X1 with respect to the second cell array 12 (second battery cell array). The first cell array 11 and the second cell array 12 are disposed with an offset in the width direction Y, and the plurality of the battery cells 1 are arrayed in a staggered manner as viewed in the up-down direction Z. When the plurality of the battery cells 1 are disposed in a staggered manner, it is easy to suppress an increase in the dimension, in the arrangement direction X, of the battery modules 5. In the second unit module portion 52, the third cell array 13 (first battery cell array) is disposed on the arrangement direction first side X1 with respect to the fourth cell array 14 (second battery cell array). The third cell array 13 and the fourth cell array 14 are also disposed with an offset in the width direction Y, and the plurality of the battery cells 1 are arrayed in a staggered manner as viewed in the up-down direction Z.

In addition, each unit module portion 50 includes, as the holding member 3, the first holding member 31 disposed on the arrangement direction first side X1 with respect to the first battery cell array, and the second holding member 32 disposed on the arrangement direction second side X2 with respect to the second battery cell array. In the first unit module portion 51, the first side holder 41 corresponds to the first holding member 31, and the intermediate holder 42 corresponds to the second holding member 32. That is, the first unit module portion 51 includes the first side holder 41 (first holding member 31) disposed on the arrangement direction first side X1 with respect to the first cell array 11, and the intermediate holder 42 (second holding member 32) disposed on the arrangement direction second side X2 with respect to the second cell array 12. In the second unit module portion 52, the intermediate holder 42 corresponds to the first holding member 31, and the second side holder 43 corresponds to the second holding member 32. That is, the second unit module portion 52 includes the intermediate holder 42 (first holding member 31) disposed on the arrangement direction first side X1 with respect to the third cell array 13, and the second side holder 43 (second holding member 32) disposed on the arrangement direction second side X2 with respect to the fourth cell array 14.

As described above, a set of the heat exchange member side facing surfaces 8c of the plurality of the battery cells 1 constituting the first battery cell array (first cell array 11, third cell array 13) is the heat exchange member side first facing surface group 81, and a set of the heat exchange member side facing surfaces 8c of the plurality of the battery cells 1 constituting the second battery cell array (second cell array 12, fourth cell array 14) is the heat exchange member side second facing surface group 82. The heat exchange member side first facing surface group 81 and the heat exchange member side second facing surface group 82 have shapes each having unevenness in the arrangement direction X. As illustrated in Figs. 2 and 3, the positional relationship between the first holding member 31 and the second holding member 32 in the arrangement direction X is fixed. As is apparent from the comparison between the heat exchange member 2 illustrated in Fig. 1 and the heat exchange member 2 illustrated in Figs. 2 and 3, the heat exchange member 2 (first heat exchange member 21, second heat exchange member 22) is sandwiched between the heat exchange member side first facing surface group 81 and the heat exchange member side second facing surface group 82 in a state of being deformed following the shapes of the heat exchange member side first facing surface group 81 and the heat exchange member side second facing surface group 82.

As illustrated in Fig. 1 and the like, a support surface 3s, which is a surface of the holding member 3 facing the arrangement direction X, also has unevenness formed to have different protrusion amounts in the arrangement direction X. Specifically, a first support surface 31s, which is a surface of the first holding member 31 facing the arrangement direction second side X2, has unevenness in the arrangement direction X corresponding to the shape of the first side facing surface 8a ("first side facing surface group" in the case of the cell array 10). In addition, a second support surface 32s, which is a surface of the second holding member 32 facing the arrangement direction first side X1, has unevenness in the arrangement direction X corresponding to the shape of the second side facing surface 8b ("second side facing surface group" in the case of the cell array 10).

In the first example illustrated in Figs. 1 to 3, and in the first unit module portion 51, the support surface 3s of the first side holder 41 (first holding member 31) facing the arrangement direction second side X2 is the first support surface 31s having unevenness in the arrangement direction X, and the support surface 3s of the intermediate holder 42 (second holding member 32) facing the arrangement direction first side X1 is the second support surface 32s having unevenness in the arrangement direction X. In the second unit module portion 52, the support surface 3s of the intermediate holder 42 (first holding member 31) facing the arrangement direction second side X2 is the first support surface 31s having unevenness in the arrangement direction X, and the support surface 3s of the second side holder 43 (second holding member 32) facing the arrangement direction first side X1 is the second support surface 32s having unevenness in the arrangement direction X, although reference numerals are omitted in the drawings for the sake of simplicity.

The first side holder 41, the intermediate holder 42, and the second side holder 43 (appropriately, collectively referred to as a "holder"), corresponding to the holding member 3, include a wall portion surrounding the periphery of the battery cell 1. With the shape of the wall portion changing along the width direction Y depending on the shape of the battery cell 1, unevenness is formed on the support surface 3s. That is, the first support surface 31s is provided to cover the arrangement direction first side X1 of the battery cell 1, and the second support surface 32s is provided to cover the arrangement direction second side X2 of the battery cell 1. In addition, the first side holder 41, the intermediate holder 42, and the second side holder 43 include a bottom portion 39 that supports the battery cell 1 on the lower side Z2 in the up-down direction Z (see Figs. 1 and 3). When the battery cell 1 is placed on the bottom portion 39 and the periphery of the battery cell 1 is surrounded by the wall portion, the battery cell 1 can be housed in the holder.

In the present embodiment, the support surface 3s of the holding member 3 has an uneven shape, and the holding member 3 is configured to be able to house the battery cell 1, as described above. However, as long as the holding member 3 can hold the battery cell 1, it is not limited to the configuration in which the support surface 3s has an uneven shape, but the support surface may be flat.

In the first unit module portion 51, the heat exchange member 2 (first heat exchange member 21) is disposed between the battery cell 1 (first cell array 11) housed in the first side holder 41 (first holding member 31) and the battery cell 1 (second cell array 12) housed in the intermediate holder 42 (second holding member 32) in the arrangement direction X. In the second unit module portion 52, the heat exchange member 2 (second heat exchange member 22) is disposed between the battery cell 1 (third cell array 13) housed in the intermediate holder 42 (first holding member 31) and the battery cell 1 (fourth cell array 14) housed in the second side holder 43 (second holding member 32) in the arrangement direction X.

That is, it can be said that, in the first unit module portion 51 of the battery module 5, the heat exchange member 2 (first heat exchange member 21) is disposed between the battery cell 1 (battery cell array (e.g., second cell array 12)) and the first holding member 31 (e.g., first side holder 41) in the arrangement direction X. In the mode illustrated in Figs. 1 to 3, the battery cell 1 (battery cell array (here, first cell array 11)) is further disposed between the first holding member 31 (first side holder 41) and the heat exchange member 2 (first heat exchange member 21). In addition, it can be said that, also in the second unit module portion 52 of the battery module 5, the heat exchange member 2 (second heat exchange member 22) is similarly disposed between the battery cell 1 (battery cell array (e.g., fourth cell array 14)) and the first holding member 31 (e.g., intermediate holder 42) in the arrangement direction X. In the mode illustrated in Figs. 1 to 3, the battery cell 1 (battery cell array (here, third cell array 13)) is further disposed between the first holding member 31 (intermediate holder 42) and the heat exchange member 2 (second heat exchange member 22). The heat exchange member 2 has higher flexibility than the first side facing surface 8a (first side facing surface group), and is pressed toward the first side facing surface 8a (first side facing surface group) side in a state of being deformed following the shape of the first side facing surface 8a (first side facing surface group).

In the above description, the arrangement direction first side X1 and the arrangement direction second side X2 are fixed to the illustrated directions for explanation purposes. However, it may be considered that the first unit module portion 51 and the second unit module portion 52 are configured in such a manner that their placements in the arrangement direction X are reversed with respect to each other, with the intermediate holder 42 serving as a symmetry axis. That is, the second unit module portion 52 can also be said to have a configuration in which the arrangement direction first side X1 and the arrangement direction second side X2 in the first unit module portion 51 are interchanged. As described above, one side in the arrangement direction X is the arrangement direction first side X1 and the other side in the arrangement direction X is the arrangement direction second side X2, and thus there is no problem even if the arrangement direction first side X1 and the arrangement direction second side X2 are interchanged in the first unit module portion 51 and the second unit module portion 52. In this case, in the second unit module portion 52, the second side holder 43 corresponds to the first holding member 31, and the intermediate holder 42 corresponds to the second holding member 32.

As illustrated in Fig. 2, the battery module 5 includes a fixing member 6 that fixes the positional relationships between the holding members 3 in the arrangement direction X. When the battery module 5 is manufactured, a third step of fixing the positional relationships between the holding members 3 in the arrangement direction X by the fixing member 6 is performed after the second step. Although only the fixing member 6 (lower case 66) disposed on the lower side Z2 in the up-down direction Z is illustrated in Fig. 2, it is preferable that the same fixing member 6 (second fixing member) be also disposed on the upper side Z1 in the up-down direction Z. The fixing member 6 fixes the relative positions, in the arrangement direction X, of the battery cell 1 (cell array 10), the heat exchange member 2, and the holding member 3, which are main components constituting the battery module 5. Preferably, the fixing member 6 also fixes the positions, in the width direction Y, of the main components of the battery module 5. More preferably, the fixing member 6 also fixes the positions, in the up-down direction Z, of the main components of the battery module 5. Note that the fixing member 6 may be a belt-like member that fixes the relative positions, in the arrangement direction X, of the main components described above, the positions being between the upper side Z1 and the lower side Z2 of the battery module 5. Note that, although not illustrated in Fig. 6 and the like, regarding the fixing member 6, the same applies to a battery module 5 of the second example to be described later.

In terms of the unit module portion 50, it can be said that one unit module portion 50 includes the fixing member 6 that fixes the positional relationship between the first holding member 31 and the second holding member 32 in the arrangement direction X. In the mode illustrated in Figs. 1 to 3, the first unit module portion 51 includes the fixing member 6 that fixes the positional relationship between the first side holder 41 and the intermediate holder 42 in the arrangement direction X, and the second unit module portion 52 includes the fixing member 6 that fixes the positional relationship between the intermediate holder 42 and the second side holder 43 in the arrangement direction X. The fixing member 6 in the first unit module portion 51 and the fixing member 6 in the second unit module portion 52 are formed of a common member. It can be said that the battery module 5 including the first unit module portion 51 and the second unit module portion 52 includes the fixing member 6 that fixes the positional relationship between the first holding member 31 (first side holder 41, intermediate holder 42) and the second holding member 32 (intermediate holder 42 and second side holder 43) in the arrangement direction X. That is, in the third step performed after the second step, the positional relationship between the first holding member 31 and the second holding member 32 in the arrangement direction X is fixed by the fixing member 6.

Hereinafter, the battery module 5 of the second example will be described. Matters common to the first example (functional definitions of cell array 10, unit module portion 50, and facing surface 8, fixing member 6, and the like) can be easily understood from the above description, and thus reference numerals in the drawings and description are appropriately omitted. As illustrated in Figs. 6 and 7, the battery module 5 of the second example is configured to include two cell arrays 10 (first cell array 11, second cell array 12), two heat exchange members 2 (first heat exchange member 21, second heat exchange member 22), and three holding members 3 (first side holder 41, intermediate holder 42, second side holder 43). Specifically, the battery module 5 of the second example includes, from the arrangement direction first side X1 toward the arrangement direction second side X2, the first side holder 41, the first heat exchange member 21, the first cell array 11, the intermediate holder 42, the second cell array 12, the second heat exchange member 22, and the second side holder 43.

The battery module 5 of the second example also includes two unit module portions 50 (first unit module portion 51, second unit module portion 52). As illustrated in Fig. 6, the first unit module portion 51 includes the first side holder 41, the first heat exchange member 21, the first cell array 11, and the intermediate holder 42. The second unit module portion 52 includes the intermediate holder 42, the second cell array 12, the second heat exchange member 22, and the second side holder 43. The intermediate holder 42 is commonly used in the first unit module portion 51 and the second unit module portion 52. However, the intermediate holder 42 may include different members (e.g., first intermediate holder, second intermediate holder), which may be used in the respective unit module portions 50. Similarly to the battery module 5 of the first example, the battery module 5 of the second example may also be configured to include at least one unit module portion 50.

One unit module portion 50 of the battery module 5 of the second example includes at least one cell array 10 (battery cell array). The unit module portion 50 includes, as the holding member 3, a first holding member 31 disposed on the arrangement direction first side X1 with respect to the cell array 10, and a second holding member 32 disposed on the arrangement direction second side X2 with respect to the cell array 10. The positional relationship between the first holding member 31 and the second holding member 32 in the arrangement direction X is fixed, and the heat exchange member 2 is disposed between the cell array 10 and the first holding member 31 in the arrangement direction X. A support surface 3s, which is a surface of the first holding member 31 facing the heat exchange member 2 side, has a shape having unevenness in the arrangement direction X. In addition, a heat exchange member side facing surface group 80 of the cell array 10 has a shape having unevenness in the arrangement direction X. The heat exchange member 2 is sandwiched between the heat exchange member side facing surface group 80 and the support surface 3s in a state of being deformed following the shapes of the heat exchange member side facing surface group 80 and the support surface 3s.

In the first unit module portion 51 of the battery module 5 of the second example having the two unit module portions 50, the first side holder 41 corresponds to the first holding member 31, and the intermediate holder 42 corresponds to the second holding member 32. The first unit module portion 51 includes, as the holding member 3, the first side holder 41 (first holding member 31) disposed on the arrangement direction first side X1 with respect to the first cell array 11, and the intermediate holder 42 (second holding member 32) disposed on the arrangement direction second side X2 with respect to the first cell array 11. The positional relationship between the first side holder 41 and the intermediate holder 42 in the arrangement direction X is fixed, and the first heat exchange member 21 is disposed between the first cell array 11 and the first side holder 41 in the arrangement direction X. The support surface 3s (first support surface 31s) of the first side holder 41 as the first holding member 31 has a shape having unevenness in the arrangement direction X. In addition, the heat exchange member side facing surface group 80 of the first cell array 11 has a shape having unevenness in the arrangement direction X. The first heat exchange member 21 is sandwiched between the heat exchange member side facing surface group 80 and the support surface 3s (first support surface 31s) in a state of being deformed following the shapes of the heat exchange member side facing surface group 80 and the support surface 3s (first support surface 31s).

Next, the second unit module portion 52 will be described, but as described above, it may be considered that the first unit module portion 51 and the second unit module portion 52 are configured in such a manner that their placements in the arrangement direction X are reversed with respect to each other, with the intermediate holder 42 serving as a symmetry axis. In the second example, a description will be given on the assumption that the second unit module portion 52 is configured in such a manner that its placement in the arrangement direction X is reversed with respect to the first unit module portion 51. That is, the second unit module portion 52 of the second example has a configuration in which the arrangement direction first side X1 and the arrangement direction second side X2 in the first unit module portion 51 are interchanged. As described above, one side in the arrangement direction X is the arrangement direction first side X1 and the other side in the arrangement direction X is the arrangement direction second side X2, and thus there is no problem even if the arrangement direction first side X1 and the arrangement direction second side X2 are interchanged in the first unit module portion 51 and the second unit module portion 52.

In the second unit module portion 52 of the second example in which the arrangement direction first side X1 and the arrangement direction second side X2 are interchanged, the second side holder 43 corresponds to the first holding member 31, and the intermediate holder 42 corresponds to the second holding member 32. The second unit module portion 52 includes, as the holding member 3, the second side holder 43 (first holding member 31) disposed on the arrangement direction first side X1 (arrangement direction second side X2 in the drawing) with respect to the second cell array 12, and the intermediate holder 42 (second holding member 32) disposed on the arrangement direction second side X2 (arrangement direction first side X1 in the drawing) with respect to the second cell array 12. The positional relationship between the second side holder 43 and the intermediate holder 42 in the arrangement direction X is fixed, and the second heat exchange member 22 is disposed between the second cell array 12 and the second side holder 43 in the arrangement direction X. The support surface 3s (first support surface 31s) of the second side holder 43 as the first holding member 31 has a shape having unevenness in the arrangement direction X. In addition, the heat exchange member side facing surface group 80 of the second cell array 12 has a shape having unevenness in the arrangement direction X. The second heat exchange member 22 is sandwiched between the heat exchange member side facing surface group 80 and the support surface 3s (first support surface 31s) in a state of being deformed following the shapes of the heat exchange member side facing surface group 80 and the support surface 3s (first support surface 31s).

In the above mode commonly described in the first example and the second example, the holding member 3 has been exemplified by the first side holder 41, the intermediate holder 42, and the second side holder 43, which are molded articles molded in advance. The molding material is preferably a synthetic resin or a foamable resin. In particular, a foamable resin is suitable for weight reduction in the battery module 5. In the present embodiment, the support surface 3s does not have flexibility, and even if a pressing force acts on the holding member 3, the shape of the support surface 3s does not change before and after the pressing. However, the holding member 3 is not limited to such a molded article (solid), but may be potting using a foaming agent having no adhesiveness. That is, a configuration may be adopted in which, when the support surface 3s has flexibility and a pressing force acts on the holding member 3, the shape of the support surface 3s changes before and after the pressing.

The above description exemplifies a mode in which the heat exchange member side facing surface 8c of the battery cell 1 (heat exchange member side facing surface group 80 of the cell array 10) and the heat exchange member 2 are in close contact with each other. Considering the heat exchange between the battery cell 1 and the heat exchange member 2, it is preferable that the battery cell 1 and the heat exchange member 2 be in close contact with each other without a gap therebetween. However, the heat exchange member side facing surface 8c (heat exchange member side facing surface group 80) and the heat exchange member 2 may partially be in contact with each other with gaps therebetween. According to the configuration of the present embodiment, even if such a gap (clearance) occurs, it is easy to reduce the distance, along the arrangement direction X, between the heat exchange member side facing surface 8c (heat exchange member side facing surface group 80) of the battery cell 1 (cell array 10) and the heat exchange member 2.

In the above description, a mode has been exemplified for explanation purposes, in which the heat exchange member side facing surface 8c of the battery cell 1 (heat exchange member side facing surface group 80 of the cell array 10) and the heat exchange member 2 are adjacent to and in direct contact with each other in the arrangement direction X. However, the heat exchange member side facing surface 8c (heat exchange member side facing surface group 80) and the heat exchange member 2 may be adjacent to and in contact with each other in the arrangement direction X with a member (heat conductive member), such as a heat transfer sheet having no adhesiveness, interposed therebetween. That is, another member may be disposed between the heat exchange member side facing surface 8c (heat exchange member side facing surface group 80) and the heat exchange member 2 in the arrangement direction X. Here, when the heat exchange member 2 has no insulating property, it is preferable that another member have an insulating property. When the battery module 5, including such a heat conductive member, is manufactured, a heat conductive member 7 may be disposed, in the first step, between the battery cell 1 and the heat exchange member 2 in the arrangement direction X.

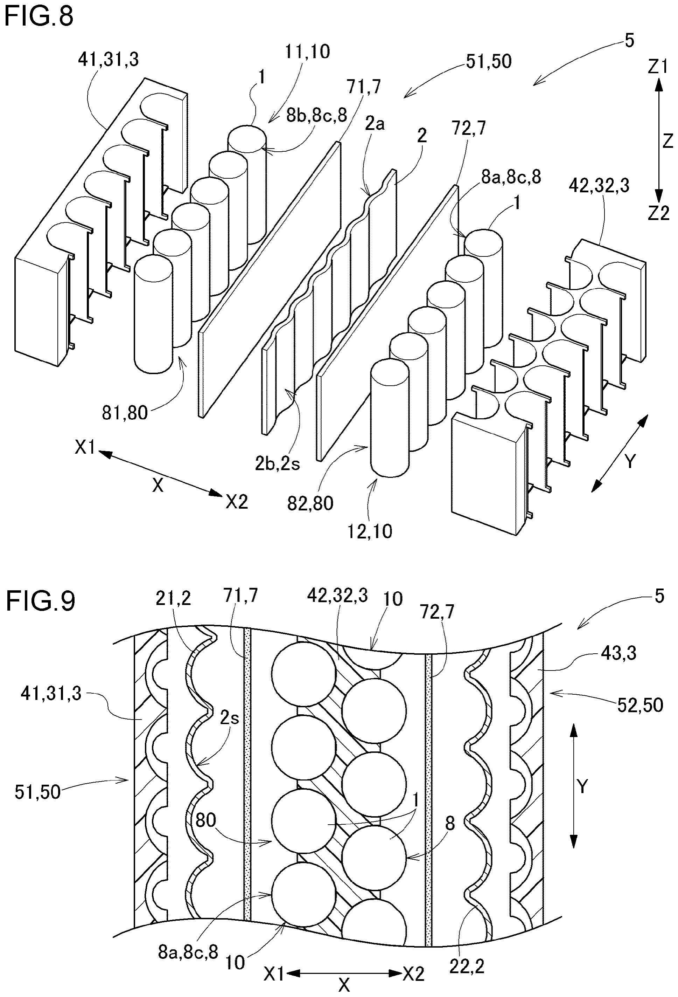

Figs. 8 and 9 illustrate a mode in which the heat conductive member 7 is disposed between the heat exchange member side facing surface 8c (heat exchange member side facing surface group 80) and the heat exchange member 2 in the arrangement direction X. Fig. 8 illustrates a mode as a third example of the battery module 5, in which the heat conductive member 7 is added to the above-described first example. Fig. 8 is an exploded perspective view corresponding to Fig. 1, but unlike Fig. 1, only the first unit module portion 51 is illustrated and the second unit module portion 52 is omitted. Fig. 9 illustrates a mode as a fourth example of the battery module 5, in which the heat conductive member 7 is added to the above-described second example. In the third and fourth examples, the heat exchange member 2 may not have flexibility, and for example, similarly to the holding member 3, the heat exchange member 2 may be formed of a molded article or may be formed of a material having high heat conductivity, such as metal. Figs. 8 and 9 illustrate a mode in which the heat exchange member 2 is a resin molded article. Note that matters common to the first example (functional definitions of cell array 10, unit module portion 50, and facing surface 8, fixing member 6, and the like) can be easily understood from the above description, and thus the reference numerals in the drawings and description are appropriately omitted. Furthermore, reference numerals for points that can be understood from the first and second examples described above with reference to Figs. 1 to 7 are omitted in Figs. 8 and 9, for the sake of simplicity.

In the battery module 5 in which the heat exchange member 2 is disposed between the battery cell 1 (including the cell array 10) and the first holding member 31 in the arrangement direction X, the heat conductive member 7 having heat conductivity is disposed between the battery cell 1 (cell array 10) and the heat exchange member 2 in the arrangement direction X, as illustrated in Figs. 8 and 9. Here, the sheet-like heat conductive member 7 is illustrated, but the heat conductive member 7 is not limited to a sheet-like member, and may be a gel or the like having no adhesiveness.

A battery side facing surface 2s, which is a surface of the heat exchange member 2 facing the battery cell 1 (cell array 10) side, has unevenness in the arrangement direction X corresponding to the shape of the heat exchange member side facing surface 8c (heat exchange member side facing surface group 80) of the battery cell 1 (cell array 10). The heat conductive member 7 has higher flexibility than the battery side facing surface 2s and the heat exchange member side facing surface 8c (heat exchange member side facing surface group 80). The heat conductive member 7 is sandwiched between the battery side facing surface 2s and the heat exchange member side facing surface 8c (heat exchange member side facing surface group 80) in a state of being deformed following the shapes of the battery side facing surface 2s and the heat exchange member side facing surface 8c (heat exchange member side facing surface group 80).

In the third example, the heat conductive members 7 are disposed between the battery cell 1 (first cell array 11) and the heat exchange member 2 and between the battery cell 1 (second cell array 12) and the heat exchange member 2 in the arrangement direction X, respectively, as illustrated in Fig. 8. Specifically, a first heat conductive member 71 is disposed between the first cell array 11 and the heat exchange member 2, and a second heat conductive member 72 is disposed between the second cell array 12 and the heat exchange member 2.

In the third example, the battery cells 1 (cell arrays 10) are arranged on both sides of the heat exchange member 2 in the arrangement direction X, as illustrated in Fig. 8. Therefore, in the third example, the battery side facing surface 2s of the heat exchange member 2 includes two surfaces of a battery side first facing surface 2a facing the first cell array 11 side and a battery side second facing surface 2b facing the second cell array 12 side (reference numeral "2s" for the battery side first facing surface 2a is omitted). Each of the battery side first facing surface 2a and the battery side second facing surface 2b has unevenness in the arrangement direction X corresponding to the shape of the heat exchange member side facing surface 8c (heat exchange member side facing surface group 80) of the battery cell 1 (cell array 10) that each of them faces. That is, the battery side first facing surface 2a has unevenness in the arrangement direction X corresponding to the shape of the heat exchange member side first facing surface group 81 of the first cell array 11 that the battery side first facing surface 2a faces. In addition, the battery side second facing surface 2b has unevenness in the arrangement direction X corresponding to the shape of the heat exchange member side second facing surface group 82 of the second cell array 12 that the battery side second facing surface 2b faces.

Each of the first heat conductive member 71 and the second heat conductive member 72 has higher flexibility than the battery side facing surface 2s (battery side first facing surface 2a, battery side second facing surface 2b) and the heat exchange member side facing surface 8c (heat exchange member side facing surface group 80). The first heat conductive member 71 is sandwiched between the battery side first facing surface 2a and the heat exchange member side facing surface 8c (heat exchange member side first facing surface group 81) in a state of being deformed following the shapes of the battery side first facing surface 2a and the heat exchange member side facing surface 8c (heat exchange member side first facing surface group 81). The second heat conductive member 72 is sandwiched between the battery side second facing surface 2b and the heat exchange member side facing surface 8c (heat exchange member side second facing surface group 82) in a state of being deformed following the shapes of the battery side second facing surface 2b and the heat exchange member side facing surface 8c (heat exchange member side second facing surface group 82).

Considering the direction in the arrangement direction X, it can be said that, in the first unit module portion 51, the heat conductive member 7 has higher flexibility than the battery side facing surface 2s and the first side facing surface 8a (first side facing surface group), and is sandwiched between the battery side facing surface 2s and the first side facing surface 8a (first side facing surface group) in a state of being deformed following the shapes of the battery side facing surface 2s and the first side facing surface 8a (first side facing surface group). As described above, the second unit module portion 52 can be considered by interchanging the arrangement direction first side X1 and the arrangement direction second side X2 in the first unit module portion 51, and thus detailed description thereof will be omitted.

In the battery module 5 of the fourth example illustrated in Fig. 9, the heat exchange member 2 is disposed between the battery cell 1 (cell array 10) and the first holding member 31 in the arrangement direction X, and the heat conductive member 7 having heat conductivity is disposed between the battery cell 1 (cell array 10) and the heat exchange member 2 in the arrangement direction X. The battery side facing surface 2s, which is a surface of the heat exchange member 2 facing the battery cell 1 (cell array 10) side, has unevenness in the arrangement direction X corresponding to the shape of the heat exchange member side facing surface 8c (heat exchange member side facing surface group 80). The heat conductive member 7 has higher flexibility than the heat exchange member side facing surface 8c (heat exchange member side facing surface group 80) and the battery side facing surface 2s. The heat conductive member 7 is sandwiched between the heat exchange member side facing surface 8c (heat exchange member side facing surface group 80) and the battery side facing surface 2s in a state of being deformed following the shape of the heat exchange member side facing surface 8c (heat exchange member side facing surface group 80) and the shape of the battery side facing surface 2s.

The battery module 5 of the fourth example also includes two unit module portions 50 of a first unit module portion 51 and a second unit module portion 52. In the first unit module portion 51, the heat conductive member 7 (first heat conductive member 71) has higher flexibility than the first side facing surface 8a (first side facing surface group) and the battery side facing surface 2s, and is sandwiched between the first side facing surface 8a (first side facing surface group) and the battery side facing surface 2s in a state of being deformed following the shape of the first side facing surface 8a (first side facing surface group) and the shape of the battery side facing surface 2s. Although some reference numerals are omitted, in the second unit module portion 52, the heat conductive member 7 (second heat conductive member 72) has higher flexibility than the second side facing surface 8b (second side facing surface group) and the battery side facing surface 2s, and is sandwiched between the second side facing surface 8b (second side facing surface group) and the battery side facing surface 2s in a state of being deformed following the shape of the second side facing surface 8b (second side facing surface group) and the shape of the battery side facing surface 2s.

As described above, it may be considered that the first unit module portion 51 and the second unit module portion 52 are configured in such a manner that their placements in the arrangement direction X are reversed with respect to each other, with the intermediate holder 42 serving as a symmetry axis. Also in the fourth example, it can be considered that the second unit module portion 52 is configured in such a manner that its placement in the arrangement direction X is reversed with respect to the first unit module portion 51. That is, also in the second unit module portion 52, it can be considered that the heat conductive member 7 has higher flexibility than the first side facing surface 8a (first side facing surface group) and the battery side facing surface 2s, and is sandwiched between the first side facing surface 8a (first side facing surface group) and the battery side facing surface 2s in a state of being deformed following the shape of the first side facing surface 8a (first side facing surface group) and the shape of the battery side facing surface 2s.

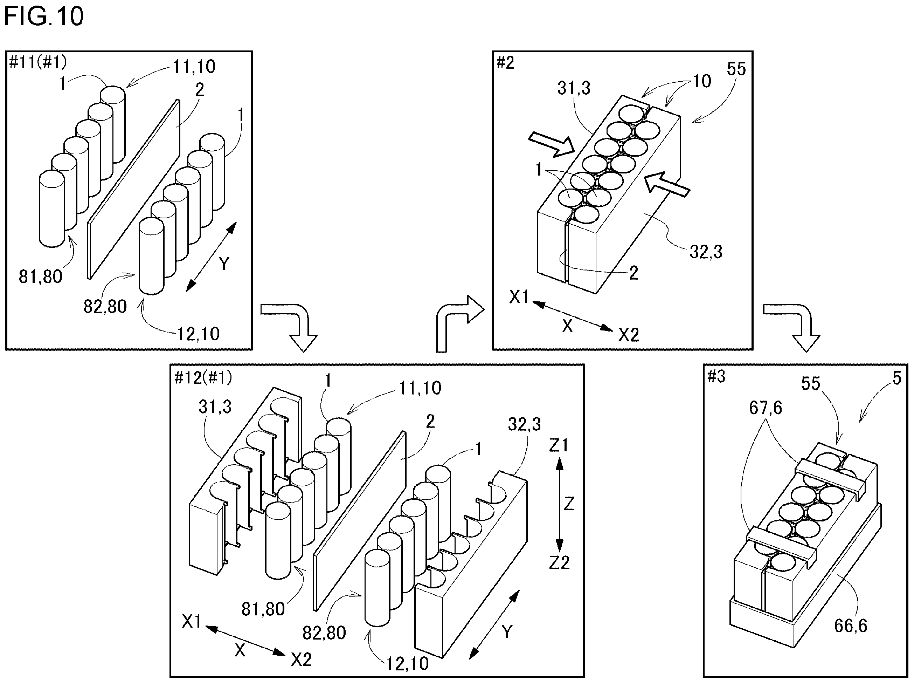

Hereinafter, the battery module manufacturing method will be described by illustrating configuration examples of the battery module 5 including the fixing member 6, with reference also to Figs. 10 to 16. Fig. 10 illustrates an example of the flow of manufacturing the battery module 5. As described above by exemplifying the basic structure of the battery module 5, the battery module manufacturing method includes a first step #1, a second step #2, and a third step #3.

The first step #1 includes a first first step #11 and a second first step #12. As will be described later, the execution order of the first first step #11 and the second first step #12 is not limited. The first first step #11 is a step of disposing the heat exchange member 2 adjacent to the battery cell 1. Fig. 10 illustrates a mode in which the cell array 10, including a plurality of the tubular battery cells 1 disposed to be arranged side by side along the direction (width direction Y) orthogonal to the arrangement direction X, is disposed. In this example, the heat exchange member 2 is disposed between the first cell array 11 and the second cell array 12 in the arrangement direction X, in the first first step #11.

The second first step #12 is a step of disposing the holding members 3 on the arrangement direction first side X1 and the arrangement direction second side X2 with respect to the battery cell 1 and the heat exchange member 2, respectively. In a case where the cell arrays 10 are disposed side by side in the arrangement direction X, the heat exchange member side first facing surface group 81 and the heat exchange member side second facing surface group 82, each having unevenness in the arrangement direction X, are disposed to sandwich the heat exchange member 2 in a state where the concave portions and the convex portions face each other in the arrangement direction X, in the second first step #12. Note that the first first step #11 and the second first step #12 may be performed simultaneously.

The second step #2 is executed after the first step #1. The second step #2 is a step of pressing the first holding member 31, which is the holding member 3 disposed on the arrangement direction first side X1, toward the arrangement direction second side X2, and pressing the second holding member 32, which is the holding member 3 disposed on the arrangement direction second side X2, toward the arrangement direction first side X1. In a case where the cell arrays 10 are disposed side by side in the arrangement direction X, the second step #2 is a step of pressing the first holding member 31 and the second holding member 32 such that the heat exchange member 2 is deformed following the shapes of the heat exchange member side first facing surface group 81 and the heat exchange member side second facing surface group 82. In the first step #1, the members may be disposed with gaps in the arrangement direction X in consideration of ease of disposing the members. In the second step #2, the heat exchange member 2 is compressed and deformed in the arrangement direction X by performing the pressing such that the distance between the first holding member 31 and the second holding member 32 in the arrangement direction X is reduced.

The third step #3 is a step of fixing the positional relationship between the first holding member 31 and the second holding member 32 in a state where the battery cell 1, the heat exchange member 2, and the holding member 3 are pressed in the arrangement direction X. Fig. 10 illustrates a state where a sub-assembly 55, which is an intermediate assembly pressed in the second step #2, is fixed by a lower case 66 and an upper bracket 67 as the fixing members 6.

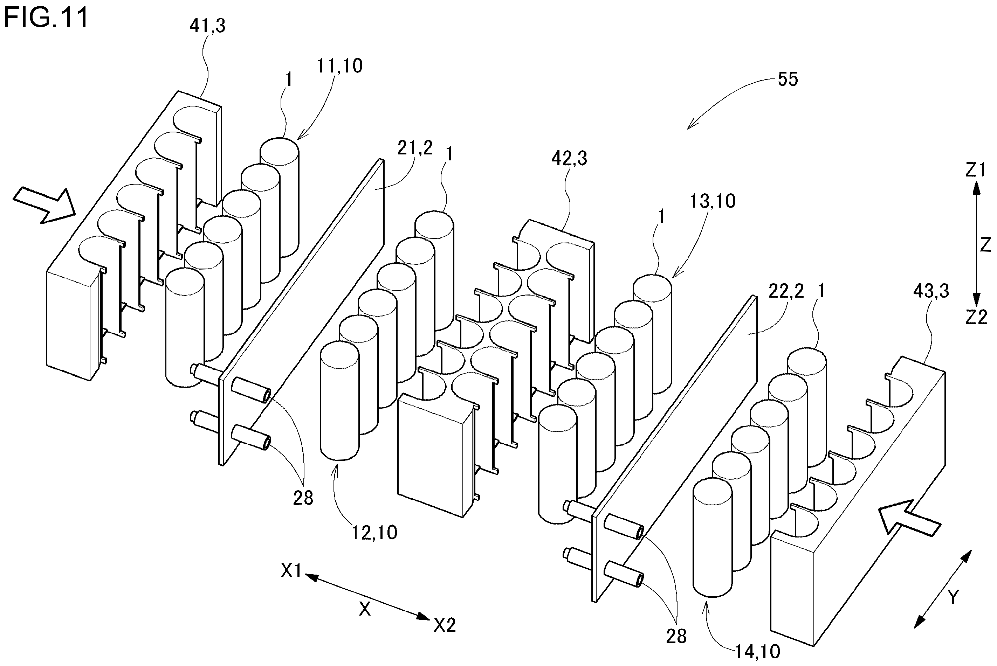

Fig. 11 illustrates an example of the first step #1. In a case where the battery module 5 includes a pair of the battery cells 1 (a pair of the cell arrays 10: first cell array 11, second cell array 12), one heat exchange member 2, and a pair of the holding members 3 (first holding member 31, second holding member 32), the first holding member 31 is disposed at the outermost position on the arrangement direction first side X1, and the second holding member 32 is disposed at the outermost position on the arrangement direction second side X2, as illustrated in Fig. 10. However, the battery module 5 may be configured such that three or more (even number is preferable, and preferably four or more) battery cells 1 (cell arrays 10) are arranged side by side in the arrangement direction X. In this case, the holding members 3 are disposed on the arrangement direction first side X1 and the arrangement direction second side X2, respectively, in the unit module portion 50 (see Figs. 1, 6, 7, etc.) configured to include a pair of the battery cells 1 (a pair of the cell arrays 10) and a single heat exchange member 2.

Note that Fig. 11 illustrates a mode in which each heat exchange member 2 includes an external flow path 28 that connects the flow paths 24 (see Figs. 4 and 5), each formed inside the heat exchange member 2, between different heat exchange members 2. When a pressing force in the arrangement direction X acts in the second step #2, the external flow paths 28 of the heat exchange members 2 adjacent to each other in the arrangement direction X (adjacent to each other with the battery cell 1 and the holding member 3 interposed therebetween) are connected to each other. Fig. 11 and the like illustrate a mode in which the heat exchange member 2 includes the external flow path 28 only on one side in the width direction Y, but the external flow paths 28 may be provided on both sides in the width direction Y. In addition, Fig. 11 and the like illustrate a mode in which each heat exchange member 2 includes two external flow paths 28, but three or more external flow paths 28 may be provided. Although Figs. 4 and 5 illustrate a mode in which each flow path 24 penetrates the heat exchange member 2 in the width direction Y, the flow path 24 may also take other modes, such as being turned back inside, depending on its relationship with the external flow path 28, rather than being limited to the penetrating mode.

Fig. 11 illustrates a mode in which four cell arrays 10 are disposed. In the first first step #11, the four cell arrays 10 are disposed side by side in the order of the first cell array 11, the second cell array 12, the third cell array 13, and the fourth cell array 14 from the arrangement direction first side X1 toward the arrangement direction second side X2. In addition, in the first first step #11, one heat exchange member 2 (first heat exchange member 21) is disposed adjacent to the first cell array 11 and the second cell array 12, and another heat exchange member 2 (second heat exchange member 22) is disposed adjacent to the third cell array 13 and the fourth cell array 14. That is, in the first first step #11, the first cell array 11, the first heat exchange member 21, the second cell array 12, the third cell array 13, the second heat exchange member 22, and the fourth cell array 14 are disposed side by side in this order from the arrangement direction first side X1 toward the arrangement direction second side X2. In a case where five or more (even number is preferred, preferably 6 or more) battery cells 1 (cell arrays 10) are disposed in the arrangement direction X, the battery cells 1 (cell arrays 10) and the heat exchange members 2 may be disposed in the same manner.

In the second first step #12, the holding members 3 are disposed on both the arrangement direction first side X1 and the arrangement direction second side X2 with respect to the set of the first cell array 11, the first heat exchange member 21, and the second cell array 12, and the holding members 3 are disposed on both the arrangement direction first side X1 and the arrangement direction second side X2 with respect to the set of the third cell array 13, the second heat exchange member 22, and the fourth cell array 14. The heat exchange member 2 is not disposed between the second cell array 12 and the third cell array 13. Therefore, the holding member 3 to be disposed on the arrangement direction second side X2 with respect to the second cell array 12 and the holding member 3 to be disposed on the arrangement direction first side X1 with respect to the third cell array 13 can be a common member. As illustrated in Fig. 10, the holding member 3 includes the first side holder 41 disposed at the outermost position on the arrangement direction first side X1, the second side holder 43 disposed at the outer most position on the arrangement direction second side X2, and the intermediate holder 42 disposed in the middle in the arrangement direction X. In the second first step #12, the first side holder 41 is disposed on the arrangement direction first side X1 and the intermediate holder 42 is disposed on the arrangement direction second side X2 with respect to the set of the first cell array 11, the first heat exchange member 21, and the second cell array 12; and the same intermediate holder 42 is disposed on the arrangement direction first side X1 and the second side holder 43 is disposed on the arrangement direction second side X2 with respect to the set of the third cell array 13, the second heat exchange member 22, and the fourth cell array 14.

As described above, the first first step #11 and the second first step #12 may be executed in the order of the first first step #11 and the second first step #12, or may be executed simultaneously. When the steps are executed simultaneously, a part of the first first step #11 and a part of the second first step #12 may be executed alternately. For example, in the case of the mode illustrated in Fig. 11, the first first step #1 and the second first step #12 may be executed simultaneously in one step, whereby the first side holder 41, the first cell array 11, the first heat exchange member 21, the second cell array 12, the intermediate holder 42, the third cell array 13, the second heat exchange member 22, the fourth cell array 14, and the second side holder 43 may be disposed in the described order from the arrangement direction first side X1 toward the arrangement direction second side X2.

In addition, for example, the first first step #11 and the second first step #12 may be executed repeatedly as follows until the placement illustrated in Fig. 11 is obtained. First, the first cell array 11, the first heat exchange member 21, and the second cell array 12 are disposed in the described order from the arrangement direction first side X1 toward the arrangement direction second side X2 (first first step #1). Next, the first side holder 41 is disposed on the arrangement direction first side X1 with respect to the first cell array 11, and the intermediate holder 42 is disposed on the arrangement direction second side X2 with respect to the second cell array 12 (second first step #12). Next, the third cell array 13, the second heat exchange member 22, and the fourth cell array 14 are disposed in the described order from the arrangement direction first side X1 toward the arrangement direction second side X2 on the arrangement direction second side X2 with respect to the intermediate holder 42 (part of the second first step #12 and the first first step #11). Finally, the second side holder 43 is disposed on the arrangement direction second side X2 with respect to the fourth cell array 14 (second first step #12).

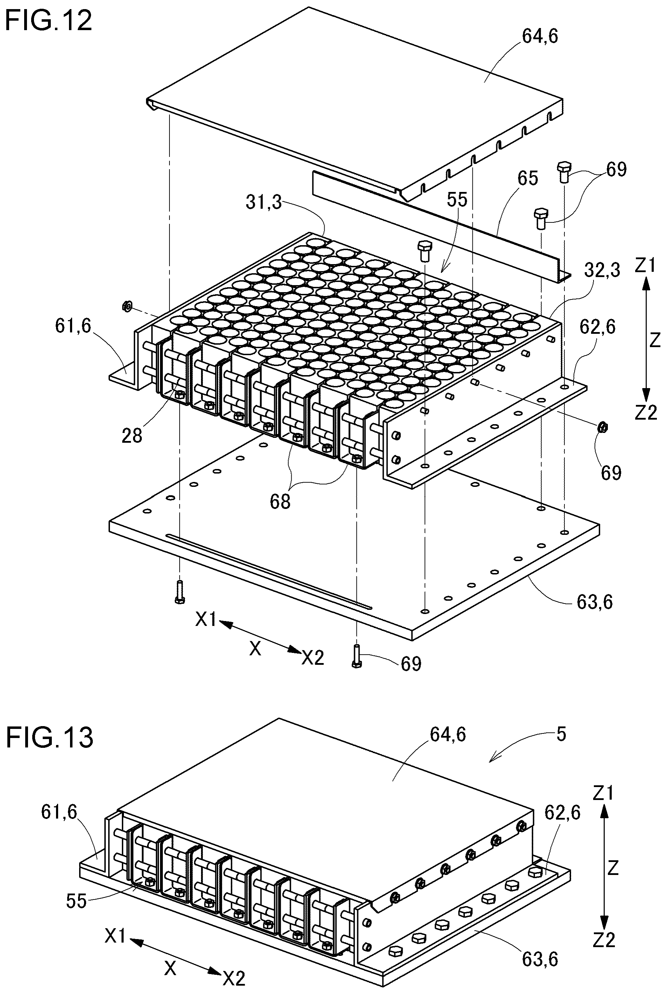

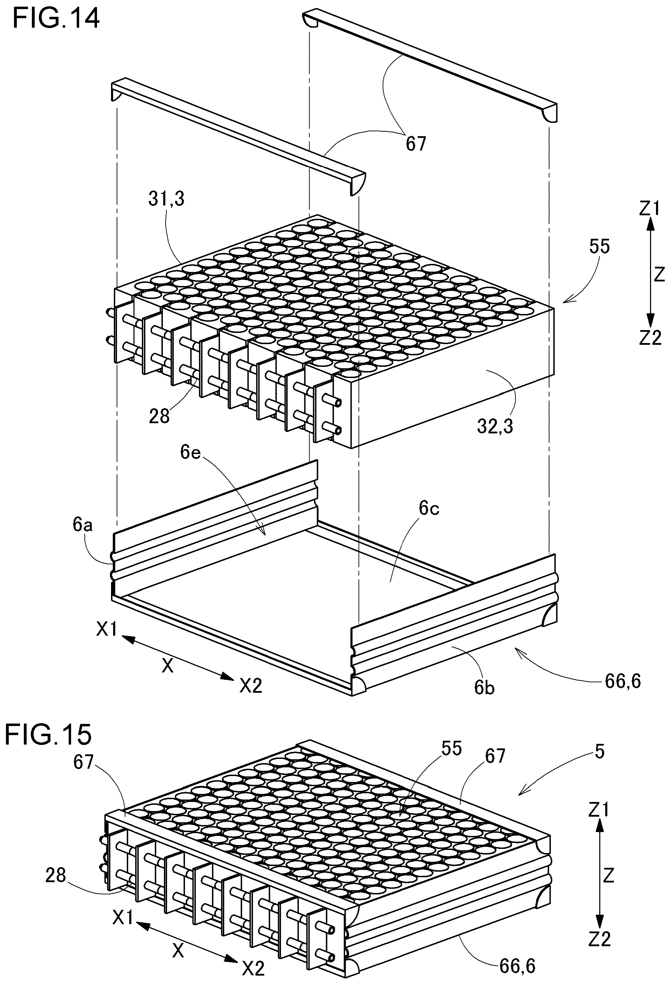

Hereinafter, the second step #2 and the third step #3 will be described by illustrating specific examples of the battery module 5. A first aspect will be described with reference to Figs. 12 and 13, and a second aspect will be described with reference to Figs. 14 to 16.

The first aspect is a mode in which the holding member 3 is pressed in the second step #2 by using the fixing member 6 that fixes the positional relationship among the battery cell 1 (cell array 10), the heat exchange member 2, and the holding member 3 in the third step #3. The exploded perspective view of Fig. 12 is a view for explaining the placement and assembling method of each member in the second step #2 and the third step #3. The perspective view of Fig. 13 illustrates the appearance of the battery module 5 manufactured according to the first aspect.

As illustrated in Fig. 12, the fixing member 6 includes at least a first bracket 61 (first fixing member), a second bracket 62 (second fixing member), and a lower plate 63 (third fixing member). Here, a mode is illustrated in which an upper plate 64 and a third bracket 65 are further provided. The first bracket 61 is disposed on the arrangement direction first side X1 with respect to the first holding member 31. In a case where the battery module 5 includes a plurality of the unit module portions 50, the first bracket 61 is disposed on the arrangement direction first side X1 with respect to the first holding member 31 located at the outermost position on the arrangement direction first side X1. The second bracket 62 is disposed on the arrangement direction second side X2 with respect to the second holding member 32. In a case where the battery module 5 includes a plurality of the unit module portions 50, the second bracket 62 is disposed on the arrangement direction second side X2 with respect to the second holding member 32 located at the outermost position on the arrangement direction second side X2. The lower plate 63 is a member to which the first bracket 61 and the second bracket 62 are connected. With them connected to the lower plate 63, the positional relationship between the first bracket 61 and the second bracket 62 in the arrangement direction X is fixed.

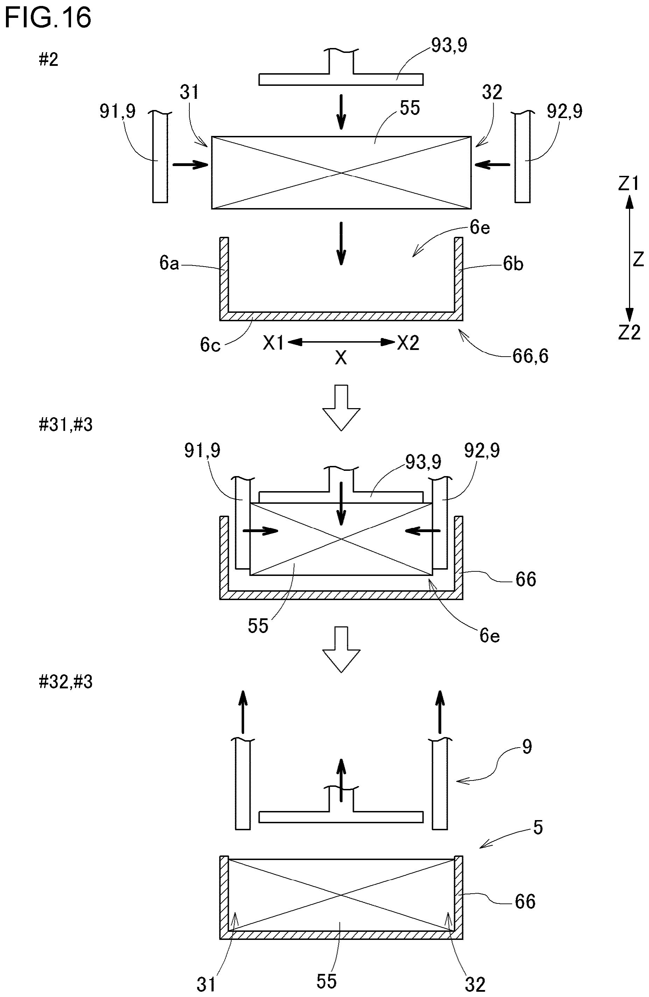

In the second step #2, the first bracket 61 is pressed toward the arrangement direction second side X2, and the second bracket 62 is pressed toward the arrangement direction first side X1. At this time, an assembly jig may be used, the assembly jig pressing the first bracket 61 from the arrangement direction first side X1 toward the arrangement direction second side X2, and pressing the second bracket 62 from the arrangement direction second side X2 toward the arrangement direction first side X1. Although not illustrated, this assembly jig may be the same as an assembly jig 9 (see Fig. 16) used in the second aspect to be described later with reference to Figs. 14 to 16.

In the third step #3, the first bracket 61 and the second bracket 62 are fixed to the lower plate 63 in a state where the pressing state in the second step #2 is maintained, that is, in a state where the positional relationship between the first bracket 61 and the second bracket 62 is maintained. Specifically, the first bracket 61 and the lower plate 63 are fastened by a fastening member 69 such as a screw, and the second bracket 62 and the lower plate 63 are fastened by the fastening member 69. The third step #3 includes at least a step of fixing the first bracket 61 and the second bracket 62 to the lower plate 63. In the first aspect, the following steps are further executed.

In the first aspect illustrated in Fig. 12, a flow path bracket 68 for holding the external flow path 28 is also provided at a position where the external flow path 28 is formed in the heat exchange member 2, and the flow path bracket 68 is also fastened to the lower plate 63. Furthermore, the upper plate 64, for covering the sub-assembly 55 from the opposite side (upper side Z1) to the lower plate 63 in the up-down direction Z, is connected to the first bracket 61 and the second bracket 62. Note that the third bracket 65 disposed on the back side in Fig. 12 is fixed to the lower plate 63, as a vibration-damping bracket for suppressing vibration of the sub-assembly 55 in the width direction Y.

The second aspect is a mode in which, in the second step #2 and the third step #3, the battery module 5 is manufactured using the assembly jig 9 (see Fig. 16) that abuts against the first holding member 31 from the arrangement direction first side X1 and abuts against the second holding member 32 from the arrangement direction second side X2. The exploded perspective view of Fig. 14 is a view for explaining the placement and assembling method of each member in the second step #2 and the third step #3. The perspective view of Fig. 15 illustrates the appearance of the battery module 5 manufactured according to the second aspect. Fig. 16 is an explanatory view schematically illustrating the second step #2 and the third step #3 using the assembly jig 9.

As illustrated in Fig. 16, the assembly jig 9 includes a first abutting portion 91 that abuts against the first holding member 31 disposed at the outermost position on the arrangement direction first side X1 in the sub-assembly 55 from the arrangement direction first side X1, and a second abutting portion 92 that abuts against the second holding member 32 disposed at the outermost position on the arrangement direction second side X2 in the sub-assembly 55 from the arrangement direction second side X2. In the present embodiment, the assembly jig 9 further includes a third abutting portion 93 that abuts against the sub-assembly 55 from the upper side Z1 in the up-down direction Z.

In the second aspect, the fixing member 6 includes a lower case 66 including the first fixing portion 6a, the second fixing portion 6b, and the connecting portion 6c that connects the first fixing portion 6a and the second fixing portion 6b, and an upper bracket 67 disposed on the opposite side to the lower case 66 in the up-down direction Z with the sub-assembly 55 interposed therebetween, with respect to the connecting portion 6c, as illustrated in Fig. 14. In the mode illustrated in Fig. 14, one battery module 5 includes two upper brackets 67. The first fixing portion 6a in the lower case 66 is a portion disposed on the arrangement direction first side X1 with respect to the first holding member 31 disposed at the outermost position on the arrangement direction first side X1 in the sub-assembly 55, in a state where the battery module 5 is formed. The second fixing portion 6b in the lower case 66 is a portion disposed on the arrangement direction second side X2 with respect to the second holding member 32 disposed at the outermost position on the arrangement direction second side X2 in the sub-assembly 55, in a state where the battery module 5 is formed. The connecting portion 6c is a portion that is positioned on the lower side Z2 of the sub-assembly 55 and connects the first fixing portion 6a and the second fixing portion 6b, in a state where the battery module 5 is formed. The lower case 66 includes a housing portion 6e in a space surrounded by the first fixing portion 6a, the second fixing portion 6b, and the connecting portion 6c. The sub-assembly 55 is housed in the housing portion 6e, whereby the battery module 5 is configured as illustrated in Fig. 15.

In the second step #2, using the assembly jig 9, the first holding member 31 is pressed toward the arrangement direction second side X2 by the first abutting portion 91, and the second holding member 32 is pressed toward the arrangement direction first side X1 by the second abutting portion 92, as illustrated in Fig. 16. At this time, it is preferable that the assembly jig 9 press them such that the length (length between jigs) in the arrangement direction X from the end, on the arrangement direction first side X1, of the first abutting portion 91 to the end, on the arrangement direction second side X2, of the second abutting portion 92 is shorter than the length (housing portion length) in the arrangement direction X between the inner surface of the first fixing portion 6a in the lower case 66 facing the arrangement direction second side X2 and the inner surface of the second fixing portion 6b facing the arrangement direction first side X1.

In the third step #3, the battery cell 1, the heat exchange member 2, and the holding member 3 are housed in the housing portion 6e along the first fixing portion 6a and the second fixing portion 6b in a state where the battery cell 1, the heat exchange member 2, and the holding member 3 are pressed in the arrangement direction X by the assembly jig 9 (#31). Since the sub-assembly 55 is pressed such that the length between jigs is shorter than the housing portion length, the sub-assembly 55 can be housed in the housing portion 6e in a state where no contact is caused between the first abutting portion 91 and the first fixing portion 6a and between the second abutting portion 92 and the second fixing portion 6b. By moving the first abutting portion 91 and the second abutting portion 92 toward the upper side Z1 in a state where the sub-assembly 55 is housed in the housing portion 6e and is pressed toward the lower side Z2 by abutting the third abutting portion 93 against the upper side Z1 of the sub-assembly 55, the assembly jig 9 can be pulled out from the housing portion 6e without dragging the sub-assembly 55 (#32). Thereafter, the third abutting portion 93 is moved toward the upper side Z1 (#32). In the step "#31", the first abutting portion 91 and the second abutting portion 92 may be moved toward the upper side Z1 while the sub-assembly 55 is pressed toward the lower side Z2 by the third abutting portion 93 and is housed in the housing portion 6e.

Since the pressing force in the arrangement direction X no longer acts on the sub-assembly 55 housed in the housing portion 6e, the sub-assembly 55 can expand in the arrangement direction X until it abuts against the first fixing portion 6a and the second fixing portion 6b. The positional relationship between the first holding member 31 and the second holding member 32 is fixed by the first fixing portion 6a and the second fixing portion 6b. That is, in a state where the battery cell 1 (cell array 10), the heat exchange member 2, and the holding member 3 are pressed in the arrangement direction X by the first fixing portion 6a and the second fixing portion 6b constituting the fixing member 6, the positional relationship between the first holding member 31 and the second holding member 32 is fixed.

In the third step #3, the upper bracket 67 is attached to the lower case 66 so as to further connect the first fixing portion 6a and the second fixing portion 6b. The upper bracket 67 fixes the sub-assembly 55 in the lower case 66 so as not to move from the housing portion 6e toward the upper side Z1.

Note that, in the second step #2 and the third step #3 of the first aspect described above with reference to Figs. 12 and 13, the assembly jig 9 of the second aspect may be used. For example, in the second step #2, using the assembly jig 9, the first bracket 61 is pressed from the arrangement direction first side X1 toward the arrangement direction second side X2 by the first abutting portion 91, and the second bracket 62 is pressed from the arrangement direction second side X2 toward the arrangement direction first side X1 by the second abutting portion 92. In the third step #3, in this state, the first bracket 61 and the second bracket 62 are abutted against the lower plate 63 for fixing its position, and the first bracket 61 and the second bracket 62 are fastened to the lower plate 63.

As described above, the battery module manufacturing method for manufacturing a battery module 5 including at least one battery cell 1, a heat exchange member 2 in which a flow path 24 through which a heat medium flows is formed, and a holding member 3 that holds a positional relationship between the battery cell 1 and the heat exchange member 2 can include: a first step #1 of disposing the heat exchange member 2 adjacent to the battery cell 1 and disposing the holding members 3 on an arrangement direction first side X1 and an arrangement direction second side X2 with respect to the battery cell 1 and the heat exchange member 2, respectively; a second step #2 of pressing a first holding member 31 disposed on the arrangement direction first side X1 toward the arrangement direction second side X2 and pressing a second holding member 32 disposed on the arrangement direction second side X2 toward the arrangement direction first side X1; and a third step #3 of fixing a positional relationship between the first holding member 31 and the second holding member 32 in a state where the battery cell 1, the heat exchange member 2, and the holding member 3 are pressed in the arrangement direction X.

According to this manufacturing method, the battery cell 1 and the heat exchange member 2 are sandwiched and held in the arrangement direction X by the holding members 3 disposed on the arrangement direction first side X1 and the arrangement direction second side X2, respectively, and the positional relationship between the holding members 3 is fixed in the state of maintaining this state. Therefore, the battery cell and the heat exchange member can be properly positioned without using an adhesive, a filler, or the like, and the battery module 5 can be manufactured. In addition, it is possible to reduce the need to interpose an adhesive, a filler, or the like between the battery cell 1 and the heat exchange member 2, between the battery cell 1 and any holding member 3, and between the heat exchange member 2 and any holding member 3, whereby the battery module 5 can also be disassembled easily.

In the above, a method for manufacturing the battery module 5 including the battery cell 1, the heat exchange member 2, and the holding member 3 has been exemplified and described with reference to Figs. 10 to 16. However, the manufacturing method of the present embodiment can also be applied to the manufacturing of the battery module 5 including the battery cell 1 and the heat exchange member 2 without including the holding member 3.

That is, the battery module manufacturing method for manufacturing a battery module 5 including at least one battery cell 1(or at least one cell array 10) and a heat exchange member 2 in which a flow path through which a heat medium flows is provided may include: a first step #1 of disposing the heat exchange member 2 adjacent to the battery cell 1 (cell array 10) along the arrangement direction X; a second step #2 of pressing the battery cell 1 (cell array 10) and the heat exchange member 2 in the arrangement direction X; and a third step #3 of fixing a positional relationship between the battery cell 1 (cell array 10) and the heat exchange member 2. That is, a mode may be adopted in which, of the first first step #11 and the second first step #12, only the first first step #11 is executed as the first step #1. In the second step #2, among the battery cells 1 (cell array 10) and the heat exchange members 2, a member (referred to as a "first side member") located at the outermost position on the arrangement direction first side X1 is pressed toward the arrangement direction second side X2, and a member (referred to as a "second side member") located at the outermost position on the arrangement direction second side X2 is pressed toward the arrangement direction first side X1. In the third step #3, the positional relationship between the battery cell 1 (cell array 10) and the heat exchange member 2 is fixed in a state where the battery cell 1 (cell array 10) and the heat exchange member 2 are pressed in the arrangement direction X.

Note that, in the second step #2, the pressing is performed such that the thickness of the heat exchange member 2 in the arrangement direction X after the completion of the second step #2 is smaller than that before the start of the second step #2. In a case where the battery module 5 includes at least two cell arrays 10, the pressing in the second step #2 is performed such that the heat exchange member 2 is deformed following the shapes of the heat exchange member side first facing surface group 81 and the heat exchange member side second facing surface group 82.

It is preferable that the battery module 5 include at least two battery cells 1 (at least two cell arrays 10) and a heat exchange member 2 disposed between the two battery cells 1 (cell arrays 10). In other words, it is preferable that the battery module 5 be configured to include n battery cells 1 (n cell arrays 10) and "n - 1" heat exchange members 2 disposed between the respective battery cells 1 (cell arrays 10), where "n" is a natural number. In this case, each of the first side member and the second side member can be configured as the battery cell 1 (cell array 10), and the pressing can be performed properly in the second step #2. In addition, the fixing can be performed properly in the third step #3, in which the first side member is prevented from moving toward the arrangement direction first side X1, and the second side member is prevented from moving toward the arrangement direction second side X2.

Naturally, the battery module 5 may be configured to include "n + 1" heat exchange members 2 and n battery cells 1 (n cell arrays 10) disposed between the respective heat exchange members 2. In this case, each of the first side member and the second side member serves as the heat exchange member 2. The heat exchange member 2 corresponding to the first side member and the second side member is adjacent to the battery cell 1 (cell array 10) only on one side in the arrangement direction X.

Naturally, the battery module 5 may be configured to include n battery cells 1 (n cell arrays 10) and n heat exchange members 2 alternately disposed with the battery cells 1 (cell arrays 10) along the arrangement direction X. In this case, one of the first side member and the second side member serves as the battery cell 1 (cell array 10), and the other serves as the heat exchange member 2.

Since this manufacturing method can be more easily understood than the above description with reference to Figs. 10 to 16, illustration and detailed description thereof are omitted. For example, in the example of the flow of manufacturing the battery module 5 illustrated in Fig. 10, the second first step #12 is not executed, and the second step #2 and the third step #3 can be easily understood by replacing them with a mode of pressing and fixing the product of the first first step #11. In Fig. 11, for example, the first side holder 41 and the second side holder 43 are eliminated and the intermediate holder 42 is replaced with the heat exchange member 2, whereby the first step #1 (first first step #11) in the manufacturing method can be easily understood. When the holding member 3 is removed from Fig. 11 as described above, the first cell array 11 corresponds to the first side member, and the fourth cell array 14 corresponds to the second side member.

The same applies to the first aspect (Figs. 12 and 13) and the second aspect (Figs. 14 to 16) in which the second step #2 and the third step #3 have been described by illustrating specific examples of the battery module 5. In both the first aspect and the second aspect, instead of the holding member 3, the battery cell 1 (cell array 10) or the heat exchange member 2 is configured as the first side member and the second side member, and preferably, the battery cell 1 (cell array 10) is configured as the first side member and the second side member. It can be easily understood by replacing the first side holder 41 with the first side member and the second side holder 43 with the second side member in the above description. In common to the first aspect and the second aspect, the battery module 5 includes the fixing member 6 that fixes the positional relationship between the battery cell 1 and the heat exchange member 2.

For example, in the first aspect, the fixing member 6 includes the first bracket 61 (first fixing member) disposed on the arrangement direction first side X1 with respect to the first side member, the second bracket 62 (second fixing member) disposed on the arrangement direction second side X2 with respect to the second side member, and the lower plate 63 (third fixing member) to which the first bracket 61 and the second bracket 62 are connected. In the second step #2, the first bracket 61 is pressed toward the arrangement direction second side X2, and the second bracket 62 is pressed toward the arrangement direction first side X1. In the third step #3, the first bracket 61 and the second bracket 62 are fixed to the lower plate 63 in a state where the positional relationship between the first bracket 61 and the second bracket 62 is maintained.

In the second aspect, the assembly jig 9, including the first abutting portion 91 that abuts against the first side member from the arrangement direction first side X1 and the second abutting portion 92 that abuts against the second side member from the arrangement direction second side X2, is used. In the second step #2, the first abutting portion 91 presses the first side member toward the arrangement direction second side X2, and the second abutting portion 92 presses the second side member toward the arrangement direction first side X1. In the third step #3, the positional relationship between the battery cell 1 (cell array 10) and the heat exchange member 2 is fixed by the fixing member 6 in a state where the battery cell 1 (cell array 10) and the heat exchange member 2 are pressed in the arrangement direction X.

The fixing member 6 of the second aspect includes, in a state where the battery module 5 is formed, the first fixing portion 6a disposed on the arrangement direction first side X1 with respect to the first side member, the second fixing portion 6b disposed on the arrangement direction second side X2 with respect to the second side member, and the connecting portion 6c that connects the first fixing portion 6a and the second fixing portion 6b along the arrangement direction X. The housing portion 6e is formed in a space surrounded by the first fixing portion 6a, the second fixing portion 6b, and the connecting portion 6c. In the third step #3, the battery cell 1 and the heat exchange member 2 are housed in the housing portion 6e along the first fixing portion 6a and the second fixing portion 6b in a state where the battery cell 1 and the heat exchange member 2 are pressed in the arrangement direction X by the assembly jig 9. Then, the positional relationship between the battery cell 1 (cell array 10) and the heat exchange member 2 is fixed by the first fixing portion 6a and the second fixing portion 6b.

Hereinafter, the battery module manufacturing method described above will be briefly summarized.

As one aspect, the battery module manufacturing method is a method for manufacturing a battery module including at least one battery cell (1) and a heat exchange member (2) in which a flow path (24) through which a heat medium flows is formed, the method including, assuming that a direction, in which the battery cell (1) and the heat exchange member (2) are arranged side by side, is an arrangement direction (X): a first step (#1) of disposing the heat exchange member (2) adjacent to the battery cell (1) along an arrangement direction (X); a second step (#2) of pressing the battery cell (1) and the heat exchange member (2) in the arrangement direction (X); and a third step (#3) of fixing a positional relationship between the battery cell (1) and the heat exchange member (2).

According to this manufacturing method, the positional relationship between the battery cell (1) and the heat exchange member (2) can be fixed while the state, where the battery cell and the heat exchange member are pressed in the arrangement direction, is maintained, so that the battery module (5) can be manufactured by properly positioning the battery cell and the heat exchange member without using an adhesive, a filler, or the like. In addition, it is possible to reduce the need to interpose an adhesive, a filler, or the like between the battery cell (1) and the heat exchange member (2), whereby the battery module (5) can also be disassembled easily.

In the battery module manufacturing method, it is preferable that, in the second step (#2), the pressing is performed such that the thickness of the heat exchange member (2) in the arrangement direction (X) after the completion of the second step (#2) is smaller than that before the start of the second step (#2).

According to this configuration, it is easy to bring the battery cell (1) and the heat exchange member (2) into close contact with each other.

In addition, it is preferable in the battery module manufacturing method that: at least two battery cell arrays (10), each including a plurality of tubular battery cells (1) disposed side by side along a direction (Y) orthogonal to the arrangement direction (X), are provided; assuming that one of the two battery cell arrays (10) is a first battery cell array (11) and the other is a second battery cell array (12), a surface of the first battery cell array (11) facing the heat exchange member (2) side is a heat exchange member side first facing surface group (81), and a surface of the second battery cell array (12) facing the heat exchange member (2) side is a heat exchange member side second facing surface group (82), the heat exchange member (2) be disposed between the first battery cell array (11) and the second battery cell array (12) in the arrangement direction (X) and the heat exchange member side first facing surface group (81) and the heat exchange member side second facing surface group (82) each having unevenness in the arrangement direction (X) be disposed to sandwich the heat exchange member (2) in a state where concave portions and convex portions face each other in the arrangement direction (X), in the first step (#1); and in the second step (#2), the heat exchange member (2) be pressed so as to be deformed following the shapes of the heat exchange member side first facing surface group (81) and the heat exchange member side second facing surface group (82).

According to this configuration, the heat exchange member (2) is deformed following the shapes of the heat exchange member side first facing surface group (81) and the heat exchange member side second facing surface group (82), and thus the contact area between the heat exchange member (2) and the battery cell (1) is easily increased, which easily enhances the cooling performance of the battery cell (1).

In addition, it is preferable in the battery module manufacturing method that the battery module (5) further include a holding member (3) that holds at least the battery cell (1); assuming that one side in the arrangement direction (X) is an arrangement direction first side (X1) and the other side in the arrangement direction (X) is an arrangement direction second side (X2), the holding members (3) be further disposed on the arrangement direction first side (X1) and the arrangement direction second side (X2) with respect to the battery cell (1) and the heat exchange member (2), respectively, in the first step (#1); in the second step (#2), a first holding member (31), which is the holding member (3) disposed on the arrangement direction first side (X1), be pressed toward the arrangement direction second side (X2) and a second holding member (32), which is the holding member (3) disposed on the arrangement direction second side (X2), be pressed toward the arrangement direction first side (X1); and in the third step (#3), the positional relationship between the first holding member (31) and the second holding member (32) be fixed in a state where the battery cell (1), the heat exchange member (2), and the holding member (3) are pressed in the arrangement direction (X).

According to this manufacturing method, the battery cell (1) and the heat exchange member (2) are sandwiched and held in the arrangement direction X by the holding members (3) disposed on the arrangement direction first side (X1) and the arrangement direction second side (X2), respectively, and the positional relationship between the holding members (3) is fixed in the state of maintaining this state. Therefore, the battery cell and the heat exchange member can be properly positioned without using an adhesive, a filler, or the like, and the battery module (5) can be manufactured. In addition, it is possible to reduce the need to interpose an adhesive, a filler, or the like between the battery cell (1) and the heat exchange member (2), between the battery cell (1) and any holding member (3), and between the heat exchange member (2) and any holding member (3), whereby the battery module (5) can also be disassembled easily.

In the battery module manufacturing method, it is preferable that, in the second step (#2), the heat exchange member (2) be compressed and deformed in the arrangement direction (X) by performing the pressing such that the distance between the first holding member (31) and the second holding member (32) in the arrangement direction (X) is reduced.

According to this configuration, it is easy to bring the battery cell (1) and the heat exchange member (2) into close contact with each other.

In addition, it is preferable in the battery module manufacturing method that: the battery module (5) include a fixing member (6) that fixes a positional relationship among the battery cell (1), the heat exchange member (2), and the holding member (3); the fixing member (6) include a first fixing member (61) disposed on the arrangement direction first side with respect to the first holding member (31), a second fixing member (62) disposed on the arrangement direction second side with respect to the second holding member (32), and a third fixing member (63) to which the first fixing member (61) and the second fixing member (62) are connected; in the second step (#2), the first fixing member (61) be pressed toward the arrangement direction second side (X2) and the second fixing member (62) be pressed toward the arrangement direction first side (X1); and in the third step (#3), the first fixing member (61) and the second fixing member (62) be fixed to the third fixing member (63) in a state where a positional relationship between the first fixing member (61) and the second fixing member (62) is maintained.

According to this configuration, the pressing in the second step (#2) and the fixing in the third step (#3) while the pressing state is maintained can be realized by the fixing member (6) constituting the battery module (5).

In addition, it is preferable in the battery module manufacturing method that: the battery module (5) include a fixing member (6) that fixes a positional relationship among the battery cell (1), the heat exchange member (2), and the holding member (3); using an assembly jig (9) including a first abutting portion (91) that abuts against the first holding member (31) from the arrangement direction first side (X1) and a second abutting portion (92) that abuts against the second holding member (32) from the arrangement direction second side (X2), the first holding member (31) be pressed toward the arrangement direction second side (X2) by the first abutting portion (91) and the second holding member (32) be pressed toward the arrangement direction first side (X1) by the second abutting portion (92), in the second step (#2); and in the third step (#3), the positional relationship between the first holding member (31) and the second holding member (32) be fixed by the fixing member (6) in a state where the battery cell (1), the heat exchange member (2), and the holding member (3) are pressed in the arrangement direction.

According to this configuration, the positional relationship between the first holding member (31) and the second holding member (32) can be fixed by the fixing member (6) in a state where a reaction force due to the pressing does not act on the fixing member (6) or in a state where a reaction force due to the pressing to act on the fixing member (6) is suppressed.

In addition, it is preferable in the battery module manufacturing method that: the battery module (5) include the fixing member (6); when pressing is performed in the second step (#2) and the third step (#3) using the assembly jig (9), the fixing member (6) include a first fixing portion (6a) disposed on the arrangement direction first side (X1) with respect to the first holding member (31), a second fixing portion (6b) disposed on the arrangement direction second side (X2) with respect to the second holding member (32), and a connecting portion (6c) that connects the first fixing portion (6a) and the second fixing portion (6b) along the arrangement direction (X), and a housing portion (6e) be formed in a space surrounded by the first fixing portion (6a), the second fixing portion (6b), and the connecting portion (6c); and in the third step (#3), the battery cell (1), the heat exchange member (2), and the holding member (3) be housed in the housing portion (6e) along the first fixing portion (6a) and the second fixing portion (6b) in a state where the battery cell (1), the heat exchange member (2), and the holding member (3) are pressed in the arrangement direction (X) by the assembly jig (9), and a positional relationship between the first holding member (31) and the second holding member (32) be fixed by the first fixing portion (6a) and the second fixing portion (6b).

According to this configuration, the positional relationship between the first holding member (31) and the second holding member (32) can be easily fixed in the third step (#3) by using the fixing member (6) in which the housing portion (6e) is formed.

Hereinafter, the battery module (5) manufactured by the battery module manufacturing method described above will be briefly summarized.

As one aspect, the battery module (5) includes at least one battery cell (1), a heat exchange member (2) in which a flow path (24) through which a heat medium flows is formed, and a holding member (3) that holds a positional relationship between the battery cell (1) and the heat exchange member (2), in which, assuming that a direction, in which the battery cell (1) and the heat exchange member (2) are arranged side by side, is an arrangement direction (X), one side in the arrangement direction X is an arrangement direction first side (X1), and the other side in the arrangement direction (X) is an arrangement direction second side (X2): the holding member (3) includes a first holding member (31) disposed on the arrangement direction first side (X1) with respect to the battery cell (1) and the heat exchange member (2), and a second holding member (32) disposed on the arrangement direction second side (X2) with respect to the battery cell (1) and the heat exchange member (2); and the battery cell (1) and the heat exchange member (2) are held in a state of being sandwiched in the arrangement direction (X) by the first holding member (31) and the second holding member (32).

According to this configuration, the battery cell (1) and the heat exchange member (2) are sandwiched and held in the arrangement direction (X) by the first holding member (31) and the second holding member (32), and thus it is possible to reduce the need to interpose an adhesive, a filler, or the like between the battery cell (1) and the heat exchange member (2), between the battery cell (1) and any holding member (3), and between the heat exchange member (2) and any holding member (3). Therefore, it is easy to disassemble the battery module (5).

In addition, it is preferable in the battery module (5) that: assuming that a surface of the battery cell (1) facing the arrangement direction first side (X1) is a first side facing surface (8a), and a surface of the battery cell (1) facing the arrangement direction second side (X2) is a second side facing surface (8b), the first side facing surface (8a) and the second side facing surface (8b) have shapes each having unevenness in the arrangement direction (X); a first support surface (31s), which is a surface of the first holding member (31) facing the arrangement direction second side (X2), has unevenness in the arrangement direction (X) corresponding to the shape of the first side facing surface (8a); and a second support surface (32s), which is a surface of the second holding member (32) facing the arrangement direction first side (X1), has unevenness in the arrangement direction (X) corresponding to the shape of the second side facing surface (8b).

According to this configuration, the battery cell (1) and the heat exchange member (2) can be properly held in a state where the battery cell (1), having the uneven first side facing surface (8a) and the uneven second side facing surface (8b), and the heat exchange member (2) do not move relative to each other by the uneven first support surface (31s) and the uneven second support surface (32s).

In addition, it is preferable in the battery module (5) that: the heat exchange member (2) be disposed between the battery cell (1) and the first holding member (31) in the arrangement direction (X); and the heat exchange member (2) have higher flexibility than the first side facing surface (8a), and be pressed toward the first side facing surface (8a) side in a state of being deformed following the shape of the first side facing surface (8a).

According to this configuration, the heat exchange member (2) has higher flexibility than the first side facing surface (8a) of the battery cell (1) and is pressed toward the first side facing surface (8a) side so as to be deformed following the shape of the first side facing surface (8a), and thus even if there is an error in the relative position or relative shape between the first holding member (31) and the battery cell (1), it is easy to increase the heat transfer efficiency between the battery cell (1) and the heat exchange member (2) while the positional relationship between the battery cell (1) and the heat exchange member (2) is properly defined. In addition, the heat exchange member (2) is pressed toward the first side facing surface (8a) side using the first holding member (31) such that the heat exchange member (2) is deformed following the shape of the first side facing surface (8a), so that the battery cell (1) and the heat exchange member (2) can be properly held without an adhesive, a filler, or the like interposed between the battery cell (1) and the heat exchange member (2), whereby the battery module (5) can be easily disassembled.

In addition, it is preferable in the battery module (5) that: the heat exchange member (2) be disposed between the battery cell (1) and the first holding member (31) in the arrangement direction (X); a heat conductive member (7) having heat conductivity be disposed between the battery cell (1) and the heat exchange member (2) in the arrangement direction (X); assuming that a surface of the heat exchange member (2) facing the battery cell (1) side is a battery side facing surface (2s), the battery side facing surface (2s) have unevenness in the arrangement direction (X) corresponding to the shape of the first side facing surface (8a); and the heat conductive member (7) have higher flexibility than the first side facing surface (8a) and the battery side facing surface (2s), and be sandwiched between the first side facing surface (8a) and the battery side facing surface (2s) in a state of being deformed following the shape of the first side facing surface (8a) and the shape of the battery side facing surface (2s).

According to this configuration, the heat conductive member (7) is disposed between the battery cell (1) and the heat exchange member (2), and the heat conductive member (7) has higher flexibility than the first side facing surface (8a) and the battery side facing surface (2s). Therefore, the heat transfer efficiency between the battery cell (1) and the heat exchange member (2) can be easily increased, while the positional relationship between the battery cell (1) and the heat exchange member (2) is properly defined. In addition, the heat exchange member (2) and the heat conductive member (7) are sandwiched and disposed between the battery cell (1) and the first holding member (31), and thus even when an adhesive, a filler, or the like is not interposed between the battery cell (1) and the heat exchange member (2), the battery cell (1) and the heat exchange member (2) can be properly held, and the battery module (5) can be easily disassembled.

In addition, it is preferable that the battery module (5) include a fixing member (6) that fixes the positional relationship between the first holding member (31) and the second holding member (32) in the arrangement direction (X).

According to this configuration, the positional relationship between the first holding member (31) and the second holding member (32) can be fixed by the fixing member (6), and the battery cell (1) and the heat exchange member (2) can be properly held in a state of being sandwiched between the first holding member (31) and the second holding member (32). In addition, the battery module (5) can be easily disassembled by removing the fixing member (6).

## Claims

1. A battery module manufacturing method for manufacturing a battery module (5) including at least one battery cell (1), and
a heat exchange member (2) in which a flow path (24) through which a heat medium flows is formed, the battery module manufacturing method comprising,
assuming that a direction, in which the battery cell (1) and the heat exchange member (2) are arranged side by side, is an arrangement direction (X):
a first step (#1) of disposing the heat exchange member (2) adjacent to the battery cell (1) along the arrangement direction (X);
a second step (#2) of pressing the battery cell (1) and the heat exchange member (2) in the arrangement direction (X); and
a third step (#3) of fixing a positional relationship between the battery cell (1) and the heat exchange member (2).

2. The battery module manufacturing method according to Claim 1, wherein, in the second step (#2), pressing is performed such that a thickness of the heat exchange member (2) in the arrangement direction (X) after completion of the second step (#2) is smaller than the thickness before start of the second step (#2).

3. The battery module manufacturing method according to Claim 1, wherein:
at least two battery cell arrays (10), each including a plurality of the tubular battery cells (1) disposed side by side along a direction (Y) orthogonal to the arrangement direction (X), are provided;
assuming that one of the two battery cell arrays (10) is a first battery cell array (11) and the other is a second battery cell array (12), and
a surface of the first battery cell array (11) facing the heat exchange member (2) side is a heat exchange member side first facing surface group (81) and a surface of the second battery cell array (12) facing the heat exchange member (2) side is a heat exchange member side second facing surface group (82),
the heat exchange member (2) is disposed between the first battery cell array (11) and the second battery cell array (12) in the arrangement direction (X) and
the heat exchange member side first facing surface group (81) and the heat exchange member side second facing surface group (82) each having unevenness in the arrangement direction (X) are disposed to sandwich the heat exchange member (2) in a state where concave portions and convex portions face each other in the arrangement direction (X), in the first step (#1); and
in the second step (#2), pressing is performed such that the heat exchange member (2) is deformed following shapes of the heat exchange member side first facing surface group (81) and the heat exchange member side second facing surface group (82).

4. The battery module manufacturing method according to any one of Claims 1 to 3, wherein:
the battery module (5) further includes a holding member (3) that holds at least the battery cell (1);
assuming that one side in the arrangement direction (X) is an arrangement direction first side (X1) and the other side in the arrangement direction (X) is an arrangement direction second side (X2),
the holding members (3) are further disposed on the arrangement direction first side (X1) and the arrangement direction second side (X2) with respect to the battery cell (1) and the heat exchange member (2), respectively, in the first step (#1);
in the second step (#2), a first holding member (31), which is the holding member (3) disposed on the arrangement direction first side (X1), is pressed toward the arrangement direction second side (X2) and a second holding member (32), which is the holding member (3) disposed on the arrangement direction second side (X2), is pressed toward the arrangement direction first side (X1); and
in the third step (#3), a positional relationship between the first holding member (31) and the second holding member (32) is fixed in a state where the battery cell (1), the heat exchange member (2), and the holding member (3) are pressed in the arrangement direction (X).

5. The battery module manufacturing method according to Claim 4, wherein, in the second step (#2), the heat exchange member (2) is compressed and deformed in the arrangement direction (X) by performing pressing such that a distance between the first holding member (31) and the second holding member (32) in the arrangement direction (X) is reduced.

6. The battery module manufacturing method according to Claim 4, wherein:
the battery module (5) includes a fixing member (6) that fixes a positional relationship among the battery cell (1), the heat exchange member (2), and the holding member (3);
the fixing member (6) includes a first fixing member (61) disposed on the arrangement direction first side (X1) with respect to the first holding member (31), a second fixing member (62) disposed on the arrangement direction second side (X2) with respect to the second holding member (32), and a third fixing member (63) to which the first fixing member (61) and the second fixing member (62) are connected;
in the second step (#2), the first fixing member (61) is pressed toward the arrangement direction second side (X2) and the second fixing member (62) is pressed toward the arrangement direction first side (X1); and
in the third step (#3), the first fixing member (61) and the second fixing member (62) are fixed to the third fixing member (63) in a state where a positional relationship between the first fixing member (61) and the second fixing member (62) is maintained.

7. The battery module manufacturing method according to Claim 4, wherein:
the battery module (5) includes a fixing member (6) that fixes a positional relationship among the battery cell (1), the heat exchange member (2), and the holding member (3);
using an assembly jig (9) including a first abutting portion (91) that abuts against the first holding member (31) from the arrangement direction first side (X1) and a second abutting portion (92) that abuts against the second holding member (32) from the arrangement direction second side (X2),
the first holding member (31) is pressed toward the arrangement direction second side (X2) by the first abutting portion (91) and the second holding member (32) is pressed toward the arrangement direction first side (X1) by the second abutting portion (92), in the second step (#2); and
in the third step (#3), a positional relationship between the first holding member (31) and the second holding member (32) is fixed by the fixing member (6) in a state where the battery cell (1), the heat exchange member (2), and the holding member (3) are pressed in the arrangement direction (X).

8. The battery module manufacturing method according to Claim 7, wherein:
the fixing member (6) includes a first fixing portion (6a) disposed on the arrangement direction first side (X1) with respect to the first holding member (31), a second fixing portion (6b) disposed on the arrangement direction second side (X2) with respect to the second holding member (32), and a connecting portion (6c) that connects the first fixing portion (6a) and the second fixing portion (6b) along the arrangement direction (X); a housing portion (6e) is formed in a space surrounded by the first fixing portion (6a), the second fixing portion (6b), and the connecting portion (6c); and in the third step (#3), the battery cell (1), the heat exchange member (2), and the holding member (3) are housed in the housing portion (6e) along the first fixing portion (6a) and the second fixing portion (6b) and a positional relationship between the first holding member (31) and the second holding member (32) is fixed by the first fixing portion (6a) and the second fixing portion (6b), in a state where the battery cell (1), the heat exchange member (2), and the holding member (3) are pressed in the arrangement direction (X) by the assembly jig (9).
